(19) Europäisches Patentamt
European Patent Office
Office européen des brevets

(11) **EP 2 838 279 A1**

(12) **EUROPEAN PATENT APPLICATION**

(43) Date of publication:
**18.02.2015 Bulletin 2015/08**

(51) Int Cl.:
*H04W 4/00* (2009.01)     *H04W 52/04* (2009.01)

(21) Application number: **14180812.1**

(22) Date of filing: **13.08.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **16.08.2013   KR 20130097267**<br><br>(71) Applicant: **Samsung Electronics Co., Ltd**<br>**Gyeonggi-do 443-742 (KR)** | (72) Inventors:<br>• **Yoon, Suha**<br>  **443-742 Gyeonggi-do (KR)**<br>• **Son, Kwangsub**<br>  **443-742 Gyeonggi-do (KR)**<br>• **Choi, Wonsuk**<br>  **443-742 Gyeonggi-do (KR)**<br>• **Han, Youngeun**<br>  **443-742 Gyeonggi-do (KR)**<br><br>(74) Representative: **Nederlandsch Octrooibureau**<br>**P.O. Box 29720**<br>**2502 LS The Hague (NL)** |

(54)     **Method and apparatus for transmitting/receiving data based on wireless communication**

(57)     An electronic device performs a method of transmitting or receiving data. The electronic device includes: a transmission/reception module configured to transmit or receive data by using a communication channel formed based on wireless communication; and at least one filter having filter information related to a selection of at least one of data transmitted through the communication channel formed by the transmission module and data received through the communication channel formed by the reception module.

FIG. 1

**Description**

**TECHNICAL FIELD**

The present disclosure relates generally to a communication method and apparatus, and more particularly, to a method and an apparatus for transmitting or receiving data between devices by using wireless communication.

**BACKGROUND**

Some electronic devices have a communication function and electronic devices with small sizes enough to be carried have been manufactured and sold. Recently, the electronic devices have dramatically grown on the strength of supporting of hardware and software.

Among the electronic devices, a portable electronic device uses a mobile communication network system using a base station to support a communication function while supporting mobility. In order to use the mobile communication network system, it is required to design and install a base station, a base station controller, and a mobile switching center to configure the system.

**SUMMARY**

According to the related art, an electronic device supports a communication service used based on a server over a network. When the electronic device cannot access the server over the network, the use of the communication service may be limited.

According to an increase in communication traffic, a communication technology of a wireless network has been rapidly developed. A communication technology has been developed to improve a speed, a quality of a capacity of the communication through the wireless network, but there is a limitation due to limited resources. A direct wireless communication technology through which electronic devices (for example, user devices such as a mobile phone or a tablet computer) can directly exchange data without passing through a base station can be provided. According to the communication technology (for example, communication technology between devices), it is possible to reduce overloads of the base station, mitigate a frequency lack phenomenon, and provide various application services and business models.

In accordance with an aspect of the present disclosure, an electronic device is provided. The electronic device includes: a transmission/reception module configured to transmit or receive data by using a communication channel formed based on wireless communication; and at least one filter having filter information related to a selection of at least one of data transmitted through the communication channel formed by the transmission module and data received through the communication channel formed by the reception module.

In accordance with another aspect of the present disclosure, a method of transmitting or receiving data by using wireless communication is provided. The method includes: selecting a transmission filter for filtering data to be transmitted based on wireless communication or selecting a reception filter for filtering data to be received based on the wireless communication; and transmitting data filtered through the transmission filter or receiving data filtered through the reception filter.

In accordance with another aspect of the present disclosure, a non-transitory machine-readable storage medium storing commands is provided. The commands are configured when executed to cause one or more processors to perform one or more operations. The one or more operations includes at least one of: a first data processing operation of selecting at least one of data transmitted and received based on wireless communication based on a filter having particular information; a second data processing operation of selecting only a part of another electronic device from a plurality of other electronic devices found based on the wireless communication according to a predefined condition or determining communication connection orders of the other electronic devices, so as to control data transmission; and a third data processing operation of sequentially broadcasting data fragments to another electronic device based on the wireless communication and controlling to provide a particular event or content to another electronic device which sequentially responds to the data fragments or responds to at least a part of the data fragments.

A communication method and apparatus according to various embodiments can support an efficient data operation in a data transmission/reception environment over a wireless network by performing at least one of an operation of controlling data transmission based on a predefined filter, an operation of controlling data transmission based on a predefined condition, and an operation of controlling data transmission based on a relation between devices.

Further, a communication method and apparatus according to various embodiments can perform at least one of the above-described operations according to the data transmission environment, and thus support a more adaptive data operation.

In addition, a communication method and apparatus according to various embodiments can improve a use efficiency of the electronic device by effectively performing at least one of the above-described operations.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 schematically illustrates an electronic device according to various embodiments;

FIG. 2 illustrates a data processing module according to various embodiments;

FIG. 3 schematically illustrates an electronic device according to various embodiments;

FIG. 4 schematically illustrates a configuration of a situation processing module according to various embodiments;

FIG. 5 schematically illustrates a configuration of a direct communication module according to various embodiments;

FIG. 6 illustrates a filter based data processing method according to various embodiments;

FIG. 7 illustrates filter based data transmission/reception according to various embodiments;

FIG. 8 illustrates filter based data transmission/reception according to another embodiment of the various embodiments;

FIG. 9 illustrates filter based data transmission/reception according to another embodiment of the various embodiments;

FIG. 10A illustrates an operation of a reception information filter according to various embodiments;

FIG. 10B illustrates an example of a screen, which can be provided in a filter based data processing operation according to various embodiments;

FIG. 11 illustrates a more detailed configuration of a relation based data processing module according to various embodiments;

FIG. 12 illustrates a relation based data processing method according to various embodiments;

FIG. 13 illustrates a relation based data processing method according to another embodiment of the various embodiments;

FIG. 14 illustrates a relation based data processing method according to still another embodiment of the various embodiments;

FIG. 15 illustrates a more detailed configuration of an optimal condition data processing module according to various embodiments;

FIG. 16 is a flowchart illustrating an optimal condition data processing method according to various embodiments;

FIG. 17 is a flowchart illustrating a channel characteristic based optimal condition data processing method according to various embodiments;

FIG. 18 illustrates optimal condition data processing according to a channel characteristic, for example, a BER characteristic according to various embodiments;

FIG. 19 illustrates a BER characteristic formed between different electronic devices according to various embodiments;

FIG. 20 is a flowchart illustrating a distance based optimal condition data processing method according to various embodiments;

FIG. 21 illustrates a distance based optimal condition data processing situation according to various embodiments;

FIG. 22 illustrates a result of calculation of distances according to various embodiments;

FIG. 23 is a flowchart illustrating a received signal strength based optimal condition data processing method according to various embodiments;

FIG. 24 illustrates a signal strength based optimal condition data processing situation according to various embodiments;

FIG. 25 illustrates a result of received signal strengths between an electronic device and other electronic devices;

FIG. 26 is a flowchart illustrating a processing method according to an optimal condition change according to various embodiments;

FIG. 27 illustrates a data processing operation according to an optimal condition change according to various embodiments; and

FIG. 28 illustrates another data processing operation according to an optimal condition change according to various embodiments.

## DETAILED DESCRIPTION

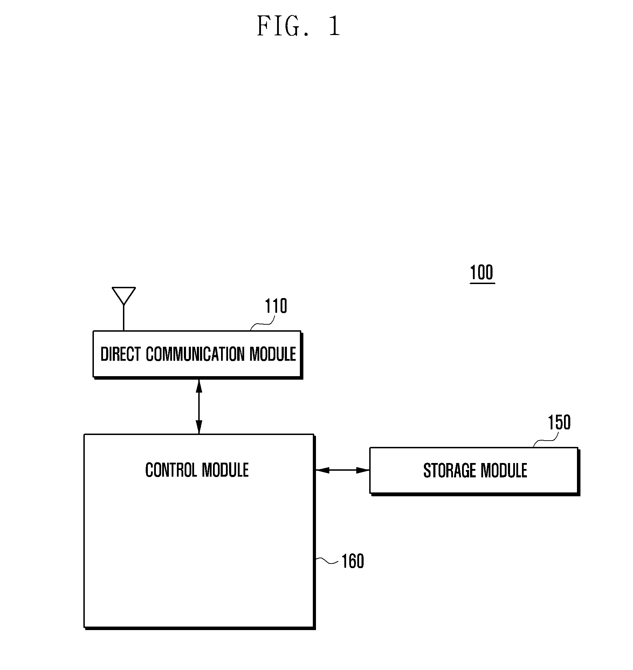

FIGURES 1 through 28 discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device.

Hereinafter, various embodiments will be described in detail with reference to the accompanying drawings. It should be noted that the same elements will be designated by the same reference numerals although they are shown in different drawings. Further, in the following description of the present disclosure, a detailed description of known functions and configurations incorporated herein will be omitted when it may make the subject matter of the present disclosure rather unclear. In the following description, it is noted that only structural elements necessary for understanding operations according to various embodiments will be described, and the description of the other elements will be omitted in order to prevent obscuring of the subject matter of the present disclosure.

For a similar reason, in the accompanying drawings, some structural elements may be exaggeratingly or schematically shown, or will be omitted. A size of each element does not necessarily reflect an actual size, and accordingly, the present disclosure is not limited by relative sizes or intervals illustrated in the accompanying drawings.

An electronic device according to the present disclosure may be a device including a communication function. A communication module providing the communication function in the electronic device may connect communication between the electronic device and another electronic device. The communication module may support a predetermined communication protocol (for example, WiFi, BlueTooth (BT), or Near Field Communication (NFC)), or predetermined network communication (for example, Internet, Local Area Network (LAN), Wide Area Network (WAN), telecommunication network, cellular network, or satellite network, or a Plain Old Telephone Service (POTS).

The communication module may be a direct communication (or direct wireless communication) module. In a Device to Device (D2D) technology corresponding to direct wireless communication between devices, data may be directly transmitted or received between devices without passing through a network. The direct communication module may allow electronic devices to directly exchange data without passing through a base station. The direct communication module may include at least one of a Long Term Evolution (LTE)-Direct communication module, a WiFi-Direct communication module, a BlueTooth (BT) communication module, a FlashLinQ communication module, a look and link communication module of an Engineer and Electronics and Telecommunications Research Institute (ETRI), a D2D communication module, a communication module to which a communication scheme defined by IEEE802.1aq is applied, and a communication module to which a communication module defined by IEEE802.15PAC is applied.

An electronic device according to the present disclosure may be a device including a communication function. For example, the electronic device may include at least one of a smart phone, a tablet Personal Computer (PC), a mobile phone, a video phone, an e-book reader, a desktop PC, a laptop PC, a netbook computer, a PDA, a Portable Multimedia Player (PMP), an MP3 player, a mobile medical device, a camera, a wearable device (for example, a Head-Mounted-Device (HMD) such as electronic glasses, electronic clothes, an electronic bracelet, an electronic necklace, an electronic accessory, an electronic tattoo, and a smart watch.

According to an embodiment, an electronic device may be a smart home appliance with a communication function. The smart home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a TV box (for example, SAMSUNG HOMESYNC, APPLE TV, or GOOGLE TV), a game console, an electronic dictionary, an electronic key, a camcorder, and an electronic picture frame.

According to some embodiments, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to an embodiment, an electronic device may include at least one of a part of furniture or a building/structure having a communication function, an electronic board, an electronic signature receiving device, a projector, and various types of measuring instruments (for example, a water meter, an electric meter, a gas meter, a radio wave meter, and the like). The electronic device according to the present disclosure may be a combination of one or more of the aforementioned various devices. Further, it is obvious to those skilled in the art that the electronic device according to the present disclosure is not limited to the aforementioned devices.

FIG. 1 schematically illustrates an electronic device according to various embodiments.

Referring to FIG. 1, the electronic device 100 may include a direct communication module 110, a control module 160, and a storage module 150.

The electronic device 100 may form a communication channel with at least one electronic device, which can perform direct wireless communication by using the direct communication module 110. The electronic device 100 may receive or transmit data through the communication channel. The electronic device 100 may transmit or receive data based on at least one of relation-based data processing, data processing according to a predetermined condition, and filter based data processing. The relation based data processing scheme may be a scheme of dividing data to be transmitted into a predetermined number of fragments and transmitting entire data or a particular event to another electronic device receiving the divided fragments. The data processing scheme according to the predetermined condition may be a scheme of forming a communication channel with another electronic device based on predefined elements, for example, a distance between devices, a received signal strength and the like, and transmitting data based on the formed communication channel. Hereinafter, a state in which various elements meet a predefined reference will be described as an optimal condition. The filter based data processing scheme may be a scheme of operating a filter in which predefined information is arranged to filter data.

The storage module 150 may store data (for example, audio content, video content, or text content) executed according to various embodiments of the present disclosure. For example, the storage module 150 may store at least one of an advertisement content, a music content, an image content, a movie content, a broadcast content, a picture content, a novel content, and a game content. Data stored in the storage module 150 may be stored while the electronic device 100 is designed. According to an embodiment, the data stored in the storage module 150 may be received from another electronic device. According to various embodiments, the data stored in the storage module 150 may include contents generated by the electronic device 100.

The storage module 150 may transmit the stored data to the direct communication module 110 in response to a request of the control module 160. The data or particular information corresponding to the data transmitted to the direct communication module 110 may be transmitted through a broadcast scheme, a multicast scheme, or a unicast scheme. Further, the data may be transmitted to another electronic device having formed a communication channel. The data received through the direct communication module 110 may be stored in the storage module 150 according to a control of the control module 160.

The storage module 150 may store a software module supporting the relation-based data processing. The storage module 150 may store an optimal condition parameter supporting optimal condition data processing and a software module supporting selection of an optimal condition. The storage module 150 may store at least one filter supporting the filter based data processing and a filter selection software module. The storage module 150 may store a filter generation software module (not shown) designed to generate a particular filter by using optimal condition parameters. The storage module 150 may store schedule information supporting an application of at least one filter to the relation-based data processing. The storage module 150 may store a software module, including at least one of a command and a routine selecting another electronic device according to an optimal condition in connection with the relation based data processing operation.

The storage module 150 may include various types of memories. For example, the storage module 150 may include at least one of a volatile memory (for example, a Dynamic Random Access Memory (DRAM), a Static RAM (SRAM), a Synchronous Dynamic RAM (SDRAM) or the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory or the like). According to various embodiments, the storage module 150 may be a Solid State Drive (SSD). Further, the storage module 150 may further include, for example, a Compact Flash (CF), a Secure Digital (SD), a Micro Secure Digital (Micro-SD), a Mini Secure Digital (Mini-SD), an extreme Digital (xD), or a memory stick.

As described above, the electronic device 100 may perform at least one of the relation-based data processing, the data processing according to the predetermined condition, and the filter based data processing. The electronic device 100 may include at least one data processing module according to the processing schemes. For example, the electronic device 100 may include first to third data processing modules. The electronic device 100 may allocate a first data processing module with respect to the filter-based data processing. The electronic device 100 may allocate a second data processing module with respect to the relation based data processing. The electronic device 100 may allocate a third data processing module with respect to the data processing according to the predetermined condition. Hereinafter, the first to third data processing modules will be described to correspond to a filter based data processing module, a relation based data processing module, and an optimal condition data processing module, respectively.

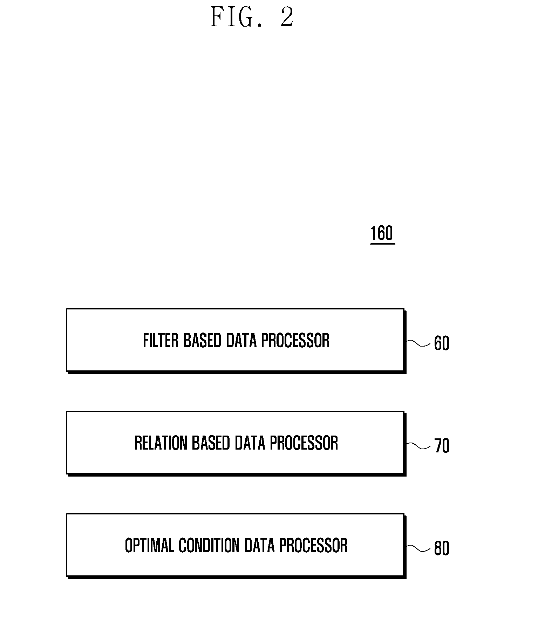

FIG. 2 illustrates a data processing module according to various embodiments.

Referring to FIG. 2, the electronic device 100 according to the present disclosure may include at least one of a filter based data processing module 60, a relation based data processing module 70, and an optimal condition data processing module 80. The data processing modules 60, 70, and 80 may include one or more of a hardware module, a middleware module, a firmware module, and a software module.

When the electronic device 100 operates the data processing modules 60, 70, and 80, the storage module 150 may store commands or routines supporting the data processing modules 60, 70, and 80 in a module form. According to an embodiment, when the electronic device 100 supports only data transmission/reception through the relation based data processing, the control module 160 may store only the relation based data processing module 70, and accordingly, the storage module 150 may store a software module supporting the relation based data processing. According to an embodiment, when the electronic device 100 supports only data transmission/reception through the filter based data processing, the control module 160 may include only the filter based data processing module 60. Accordingly, the storage module 150 may store filters supporting the filter based data processing and a filter selector. In an embodiment, when the electronic device 100 supports only data transmission/reception through the optimal condition data processing, the control module 160 may include only the optimal condition data processing module 80. Accordingly, the storage module 150 may store parameters corresponding to an optimal condition and a software module including device-selecting routines based on the parameters. The configuration of the control module 160 illustrated in FIG. 2 may include one processing module, as described above.

According to various embodiments of the present disclosure, the configuration of the control module 160 illustrated in FIG. 2 may include a plurality of processing modules according to a design scheme.

According to an embodiment, when the electronic device 100 is designed to support the relation based data processing and the optimal condition based data processing, the control module 160 may include the relation based data processing module 70 and the optimal condition data processing module 80. The storage module 150 may store an optimal condition parameter supporting the optimal condition data processing, a software module supporting optimal condition selection, and a software module including relation-processing routines supporting the relation based data processing. When the electronic device 100 is designed to complexly operate the relation based data processing and the optimal condition based data processing, the storage module 150 may include a software module or schedule information, which makes a definition such that the optimal condition parameter can be applied during the relation based data processing operation.

According to various embodiments, when the electronic device 100 is designed to support the relation based data processing and the filter based data processing, the control module 160 may include the relation based data processing module 70 and the filter based data processing module 60. The storage module 150 may store at least one filter supporting the filter-based data processing, a filter selection software module, and a software module including routines supporting the relation based data processing. Further, the storage module 150 may store a software module or schedule information set to differently apply a relation based data processing routine according to a selected filter. Alternatively, the storage module 150 may store a software module or schedule information including routines providing different filters according to relation based data processing schemes.

According to various embodiments, when the electronic device 100 is designed to support the filter based data processing and the optimal condition data processing, the control module 160 may include the optimal condition data processing module 80 and the filter based data processing module 60. The storage module 150 may store at least one filter supporting the filter based data processing, a filter selection software module, and a software module including routines supporting the optimal condition processing. Further, the storage module 150 may store a software module or schedule information including routines defined to apply different optimal conditions according to selected filters. The storage module 150 may store a software module or schedule information including routines defined to apply different filters according to optimal conditions. Further, the storage module 150 may store a software module generating a filter based on an optimal condition.

The electronic device 100 according to various embodiments of the present disclosure may include three processing modules.

According to various embodiments, when the electronic device 100 supports the relation based data processing, the optimal condition based data processing, and the filter based data processing, the control module 160 may include the relation based data processing module 70, the optimal condition data processing module 80, and the filter based data processing module 60. The storage module 150 may store a software module supporting the relation based data processing, a parameter supporting the optimal condition data processing, at least one filter supporting the filter based data processing, and a filter selection software module. Further, the storage module 150 may store a software module or schedule information including a routine defined to apply a selected filter based on an optimal condition to a particular relation scheme. In addition, the storage module 150 may store a software module or schedule information designed to apply an optimal condition when a plurality of other electronic devices are found in an operation of operating a filter selected according to a particular relation scheme. Furthermore, the storage module 150 may store a software module or schedule information designed to apply a particular filter and relation scheme to another electronic device selected according to an optimal condition.

The processing modules of the control module 160 may be implemented as independent processors or one processor may allocate tasks or threads. The processor or task may support complex data transmission/reception schemes that generate a filter by combining a relation based condition and an optimal condition or applying an optimal condition. During such an operation, the processor or task may complexly or sequentially operate schemes related to predefined schedule information or program routine. According to an embodiment, the control module 160 may control to generate at least one filter by using the optimal condition data processing module 80. The control module 160 may transmit/receive filter based data by providing the generated filter to the filter based data processing module 60. According to an embodiment, the control module 160 may first select filters suitable for a current situation or a situation according to preset schedule information by operating the filter based data processing module 60. Further, the control module 160 may control an operation of the related based data processing module 70 by using at least one selected filter.

The schedule information, the parameter, and the software module may not be stored in the storage module 150 but may be embedded in a particular hardware module or arranged in a memory device included in a particular hardware module. For example, in various embodiments of the present disclosure, the particular processing module may be included in the direct communication module 110. Alternatively, at least a part of the particular processing module may be implemented by a separate hardware module and interposed between the direct communication module 110 and the control module 160. Such a structure will be described in more detail with reference to the accompanying drawings.

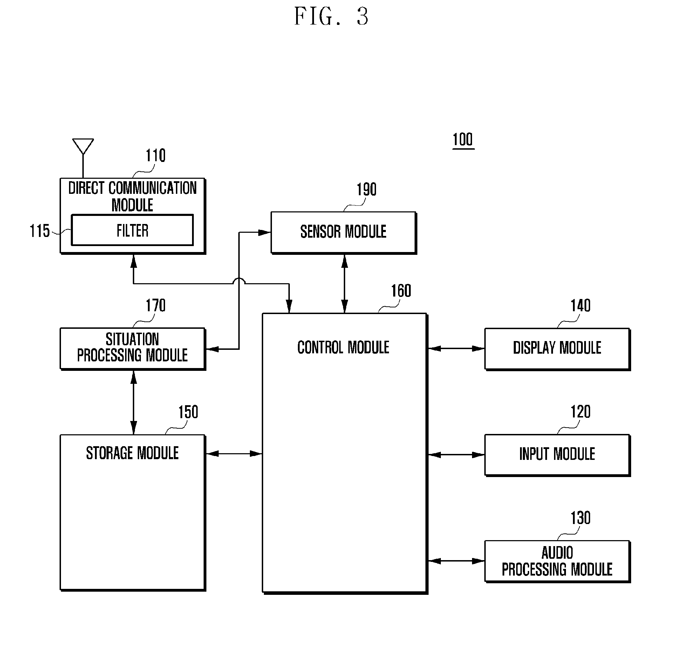

FIG. 3 schematically illustrates the electronic device 100 according to various embodiments.

The electronic device 100 may support not only a direct connection function through the filter-based data processing but also the optimal condition data processing or the relation based data processing.

Referring to FIG. 3, the electronic device 100 may include a direct communication module 110, a control module 160, a storage module 150, a situation processing module 170, an input module 120, an audio processing module 130, a display module 140, and a sensor module 190. The electronic device 100 may further include other communication modules, for example, a mobile communication module, a wired communication module and the like according to a communication supporting type of the corresponding device.

The electronic device 100 may include the situation processing module 170. The situation module 170 may support the filter-based data processing and may be implemented by a separate hardware module. The direct communication module 110 may include at least one filter 115. The direct communication module 110 may include a storage medium supporting storage of the filter 115 and a processor supporting an operation of the filter 115 stored in the storage medium. The filter 115 may be included in the situation processing module 170 or may be arranged in the control module 160 according to a design scheme.

The electronic device 100 may select the filter 115 to be applied to the direct communication module 110 based on situation information collected by the situation processing module 170 and perform a direct communication connection based on the selected filter 115. A direct connection function may be a function that performs at least one of a data transmission function and a data reception function with another electronic device through the direct communication module 110, which can transmit data without using a network.

The input module 120 may process various input signals of the electronic device 100. The input may include various compatible input devices embedded in the electronic device 100 or connected to the electronic device 100. For example, the input module 120 may include a key button, a side key, a home key, and a power key in a physical form. Further, the input module 120 may include a key button, a keypad, and a touch screen in a touch type. In addition, the input module 120 may include a keyboard or a mouse connected through an external device connection interface included in the electronic device 100. The input module 120 may generate an input signal, making a request for activating or deactivating the direct connection function based on the direct communication module 110. For example, when the electronic device 100 provides a particular application (hereafter, referred to as an "app") executed based on the direction communication module 110, the input module 120 may generate an input signal making a request for selecting and activating the corresponding app according to a user's control. The input signal may be generated in various forms according to a form of the input module 120. For example, the input signal may include a key input signal, a touch based touch gesture, or a motion sensor based motion gesture.

The input module 120 may receive various input signals related to generation of the filter 115. The input module 120 may provide the received input signal to the control module 160. The input module 120 may generate (or process) an input signal for selecting a particular filter 115, an input signal for removing the selected filter 115, or an input signal related to correction of information on the filter 115. When the electronic device 100 complexly provides a relation based data processing function, an optimal condition data processing function, and a filter based data processing function, the input module 120 may generate a signal for selecting at least one of the above described functions according to a user's control.

The display module 140 may output a screen related to the operation of the electronic device 100. For example, the display module 140 may provide a screen selecting the filter 115, a screen displaying information on the filter 115, which is currently applied, a screen displaying a list of all filters 115, and a screen describing a characteristic of each of the filters 115. According to various embodiments, in connection with the relation based data processing function of the

7

electronic device 100, the display module 140 may display at least one of a screen displaying received data fragments, a screen displaying all data generated by a combination of the data fragments, information on another electronic device providing the corresponding data fragments, and data file information provided by another electronic device. According to various embodiments, when the electronic device 100 supports the optimal condition data processing function, the display module 140 may provide information on optimal condition parameters and a screen supporting an optimal condition change. The user may differently define a weight of a parameter corresponding to a particular condition through an optimal condition change screen.

The display module 140 may output information informing which data processing scheme is currently applied during execution of the direction connection function through at least one of an image and a text. The output image or text may be provided through a popup window, which is temporarily or repeatedly output or displayed in a status bar area by a particular icon or indicator. The display module 140 may output at least one of an image or text indicating the relation based data processing, an image or text indicating the filter based data processing, and an image or text indicting the optimal condition data processing. The images or texts may be differently displayed according to respective processing schemes.

According to various embodiments, the display module 140 may include a display panel, a touch panel, or a touch sheet. For example, the display module 140 may operate as an input module. The touch panel or the touch sheet may use at least one of various touch schemes, which can detect a finger touch, an electronic pen, or a general pen touch. For example, the touch panel or the touch sheet may use an electromagnetic induction type, a capacitive type, or a resistive type.

The audio processing module 130 may process audio information of the electronic device 100. The audio processing module 130 may output audio information stored in the electronic device 100 or audio information received from the outside. The audio processing module 130 may collect particular audio information according to a call function or a recording function of the electronic device 100. The audio processing module 130 may output a notification sound, or an effect sound informing of activation of the direction connection function based on the direction communication module 110. Further, the audio processing module 130 may output various notification sounds or effect sounds according to a data transmission/reception situation. The guide sound and effect sound output may be omitted according to a user setting control or a design intention.

The storage module 150 may store various pieces of information and programs related to the operation of the electronic device 100. For example, the storage module 150 may be the same storage module as the storage module 150 of FIG. 1. For example, the storage module 150 may include information and a software module related to the relation data processing and information according to the optimal condition data processing and a software module supporting an optimal condition selection. The storage module 150 may store information and a program according to the filter based data processing.

The storage module 150 may store at least one direction connection app supporting the direct connection function. The direction connection app may be an app making a request for activating the direct communication module 110. For example, the direct connection app may be a game app executed through a communication channel formed based on the direct communication module 110. The direct connection app may be a data-sharing app, a data broadcast app, or a data search app. Further, the direct connection app may be an app searching for another electronic device or an app searching for a particular file.

When a request for activating the direct connection app among the apps stored in the storage module 150 is generated, the control module 160 may control operations of the situation processing module 170 and the direct communication module 110. The control module 160 may select at least one filter 115 to be applied to the direct communication module 110 in connection with the operation of the situation processing module 170. Further, the control module 160 may control processing of data received by the direct communication module 110 based on the selected filter 115 or process data transmission based on the selected filter 115. When at least one filter 115 is arranged in the direct communication module 110 or the situation processing module 170, the control module 160 may process only data filtered by the corresponding filter 115.

For example, when at least one filter 115 is arranged in the direct communication module and used for processing received data, the control module 160 may maintain a current function operation state or a sleep state of the electronic device 100 before data matching the filter 115 is found. When the data matching the filter 115 is received, the control module 160 may output processing according to corresponding data reception, for example, data reception notification on the display module 140, or store the received data in the storage module 150. During such an operation, the electronic device 100 may collect situation information of the electronic device without an operation of changing a function operation state, such as waking the control module 160 from the sleep state before the data matching the filter 115 is received, and may process the direct connection function. When the data matching the filter 115 is received in a particular function operation state, the control module 160 may perform background processing to achieve received data processing. For example, when filtered data is received in a video reproduction state, the control module 160 may perform the filtered data processing through the background processing while maintaining the video reproduction state.

The control module 160 may apply at least one filter 115 to the direct communication module 110 in connection with situation information collected by the situation processing module 170. According to an embodiment, the situation processing module 170 may apply a particular filter 115 to the direct communication module 110 in connection with the collected situation information. Alternatively, the direct communication module 110 may select a particular filter 115 in connection the situation information collected by the situation processing module 170.

The situation information collected by the situation processing module 170 may include at least one of environment information, preference information, and schedule information of the electronic device 100. The electronic device 100 may apply the particular filter 115 to data transmission/reception based on the collected situation information. The electronic device 100 may generate the filter 115 according to particular information provided by the situation processing module 170, or apply one of pre-generated filters 115 to the operation of the direct communication module 110.

The environment information may include at least one of position or motion information of the electronic device 100 and information of another electronic device, which can form a communication channel with the electronic device 100. The situation processing module 170 may generate preference information based on a history according to the use of the electronic device by the user. The preference information may include at least one of information on a type of an app having a history that an app is activated at least one time or a predetermined number of times or more, information on data transmitted/received through an app, information on time when an app is activated, information on a connection between the electronic device and another electronic device through an app, and information on a type of data transmitted/received to/from another electronic device through an app. The schedule information may be made by the user or may be automatically generated from the content included in a transmitted/received message or email. For example, the situation information may include not only the environment information, the preference information, and the schedule information but also alarm information, information on a type of a particular app requested to be activated by the user and various information generated during an operation of a particular app, for example, information on an app operation time and an app operation place.

According to an embodiment, the electronic device 100 may include various sensor modules 190 and collect situation information by using the sensor modules 190. For example, the electronic device 100 may include a position information collection module, an acceleration sensor, a gyro sensor, a geomagnetic sensor, an altitude sensor, a pressure sensor, a temperature sensor, or a humidity sensor connected to at least one of the situation processing module 170 or the control module 160. Further, the sensor module 190 may include at least one of, for example, an atmospheric pressure sensor, a magnetic sensor, a grip sensor, a proximity sensor, a Red, Green, and Blue (RGB) sensor, a biometric sensor, an illumination sensor, and an Ultra Violet (UV) sensor. The sensor module 190 may measure a physical quantity or detect an operation state of the electronic device 100, and convert the measured or detected information to an electronic signal. According to an embodiment, the sensor module 190 may include a E-nose sensor, an electromyography (EMG) sensor, an electroencephalogram (EEG) sensor, an electrocardiogram (ECG) sensor, a fingerprint sensor and the like. The sensor module 190 may further include a control circuit for controlling one or more sensors included in the sensor module 190.

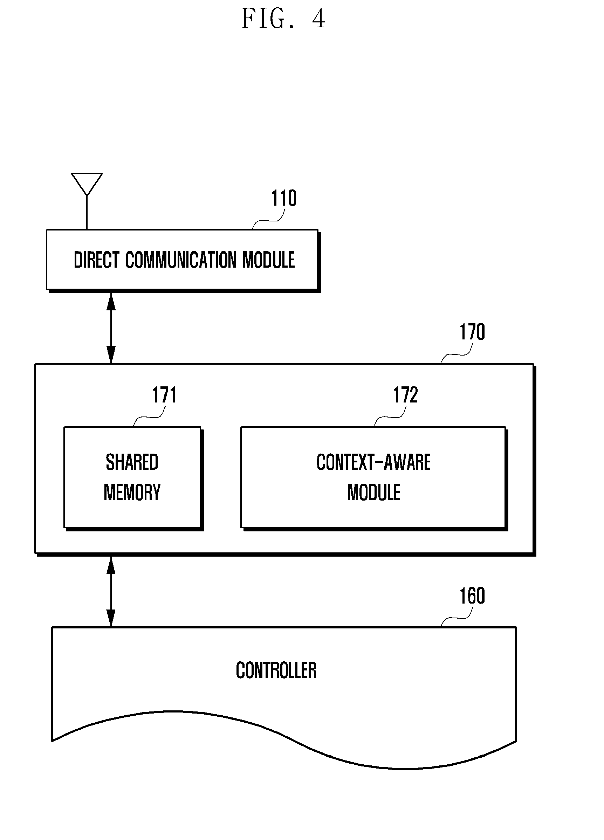

FIG. 4 schematically illustrates a configuration of the situation processing module 170 according to various embodiments.

Referring to FIG. 4, the situation processing module 170 according to the present disclosure may include a shared memory 171 and a context-aware module 172. The situation processing module 170 may be included in the direct communication module 110 or the control module 160

The shared memory 171 may temporarily store data received by the direct communication module 110. Further, the shared memory 171 may temporarily store data to be transmitted through the direct communication module 110. The shared memory 171 may support data reading or writing of the direct communication module 110 and also support data reading and writing of the control module 160. The situation processing module 170 may perform scheduling such that sharing violation is not generated in a data reading or writing operation using the shared memory 171. The shared memory 171 may store file information broadcasted by another electronic device, file information to be transmitted to another electronic device and at least one filter. The shared memory 171 may temporarily store situation information collected by the context-aware module 172. The temporarily stored situation information may be used as reference information for selecting a particular filter to be applied to the direct communication module 110. When processing of selection of the filter 115 is performed by the control module 160, the control module 160 may identify the situation information stored in the shared memory 171, select the filter 115 according to the situation information, and apply the selected filter 115 to the direct communication module 110. According to an embodiment, when the situation processing module 170 is designed to perform the selection processing of the filter 115, the situation information stored in the shared memory 171 may be used as reference information for selecting the filter 115 by the context-aware module 172.

The context-aware module 172 may collect situation information of the electronic device 100. The context aware module 172 may apply the particular filter 115 to the direct communication module 110 based on the collected situation information. According to various embodiments, when the filter 115 is located within the direct communication module 110, the context-aware module 172 may select the particular filter 115 within the direct communication module 110 based on the situation information.

The context-aware module 172 may have a right to apply the particular filter 115 to the direct communication module 110 according to the situation information. When at least one filter 115 is stored in the direct communication module 110, the context-aware module 172 may control to select the particular filter 115 according to the situation information by controlling the direction communication module 110 without a control of the control module 160. Accordingly, when the control module 160 is in a sleep state or a particular app operation state, the context-aware module 172 may support such that the direct communication module 110 can be controlled by the situation processing module 170 without the destruction of the corresponding state, any interference, or any influence on the corresponding state.

For example, the user may desire to receive particular data. During such an operation, a generation of corresponding data reception may be an event meeting a user's needs rather than generation of inconvenience such as interference. In contrast, when an interrupt is generated in the operation of the electronic device during an operation of transmitting particular data stored in the storage module 150 to another electronic device, the user may recognize the generation of the corresponding interrupt as inconvenience. The electronic device 100 according to the present disclosure may allow a particular operation state or a sleep state of the control module 160 to be not changed. For example, the electronic device 100 may support a direct approach of the context-aware module 172 to the storage module 150 and support data reading and writing operations according to the direct approach. In the direct approach to the storage module 150, the control module 160 may maintain a previous function operation state or a sleep state event during a data processing operation when a control of the control module 160 is not performed. The data reading and writing operations may include at least one of an operation of reading a filter stored in the storage module 150, a reading operation in an operation of transmitting particular data, and a writing operation of writing data received by the direct communication module 110 in the storage module 150.

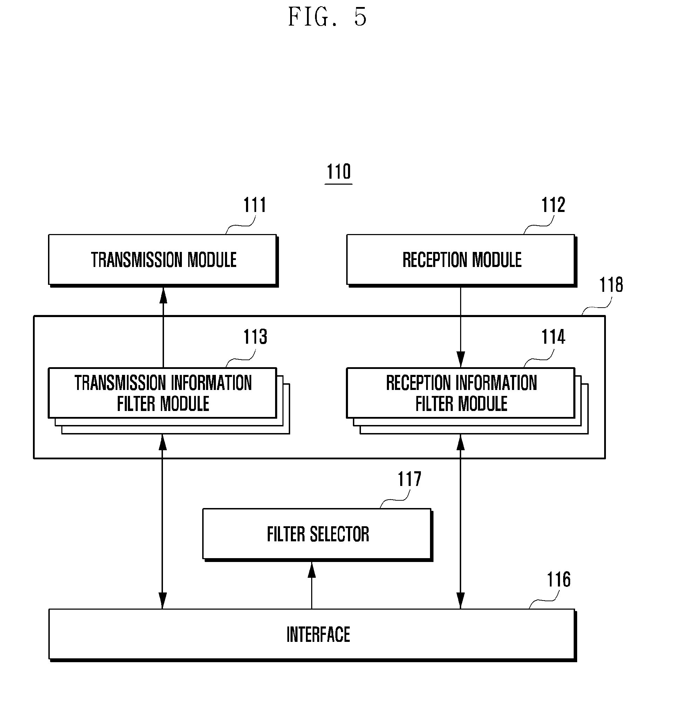

FIG. 5 schematically illustrates a configuration of the direct communication module according to various embodiments.

Referring to FIG. 5, the direct communication module 110 may include a transmission module 111, a reception module 112, a filter module 118, an interface 116, or a filter selector 117. According to an embodiment, the filter module 118 may include at least one of a transmission information filter module 113 and a reception information filter module 114. According to an embodiment, the direct communication module 110 may include only the transmission module 111 and the reception module 112. According to an embodiment, the transmission information filter module 113, the reception information filter module 114, the interface 116, and the filter selector 117 may be included in the situation processing module 170. Alternatively, the transmission information filter module 113, the reception information filter module 114, the interface 116, and the filter selector 117 may be included in the control module 160. Hereinafter, an example in which the direction communication module 110 includes all the aforementioned components will be described.

The transmission module 111 may output information related to a search for a particular content desired by the user or information making a request for providing a particular content. The transmission module 111 may output particular data, for example, search information for searching for another electronic device having a music content, a movie content, a text content, a coupon, or other information. The transmission module 111 may output only particular transmission information through the transmission information filter module 113. For example, when a filter making a request for a particular music file is located in the transmission information filter module 113, the transmission module 111 may output information for searching for another electronic device having the particular music file through a multicast scheme. When a filter making a request for a particular coupon is located in the transmission information filter module 113, the transmission module 111 may transmit information on a search for another electronic device providing the particular coupon in a broadcast form.

The reception module 112 may receive a request content related to the filter from another electronic device through the transmission module 111. The content received by the reception module 112 may be stored in the storage module 150. For example, when a number of other electronic devices having the request content is plural, the reception module 112 may select another particular electronic device by a predefined optimal condition and receive the content from the selected electronic device. According to an embodiment, the reception module 112 may select at least one electronic device having data transmission environment quality equal to or larger than a predetermined value or a best electronic device. Alternatively, the reception module 112 may first select another electronic device having a history of having previously transmitted/received a content. The optimal condition may be predefined or designated by the user. The optimal condition may be provided by the optimal condition data processing module 80.

The reception module 112 may receive data making a request for a particular content from another electronic device. In a state where the request for the particular content is received from anther electronic device, when the corresponding content is stored in the storage module 150, the reception module 112 may automatically transmit the corresponding content to another electronic device. The transmission of the content by the reception module 112 may be performed by a control of the situation processing module 170 or a direct control of the direct communication module 110 without intervention of the control module 160 according to a design scheme.

The transmission information filter module 113 may include at least one filter selected according to an operation of the transmission module 111. The transmission information filter module 113 may include information on a type of data to be transmitted through the direct communication module 110, a data name, a data type and the like. For example, the transmission information filter module 113 may include at least one of a weather information request filter, a traffic information request filter, a parking lot empty slot information request filter, a battery charging station position information request filter, a restaurant position information request filter, a game participation request filter, and a particular content request filter. When a plurality of filters is included, the transmission information filter module 113 may include a switch, which can select a particular filter. Information arranged in the transmission information filter module 113 may be arranged or written by using the input module 120 by the user. During such an operation, when the transmission information filter module 113 applies a music file request filter or a movie file request filter, the transmission information filter module 113 may make a request for outputting an input window supporting an input of a particular file name to the control module 160. In an embodiment, the particular file name may be automatically input based on a search information history recently searched by the user.

The reception information filter module 114 may include at least one filter selected according to an operation of the reception module 112. The reception information filter module 114 may include information on a type of data which can be provided to another electronic device through the direct communication module 110, information on a particular data name or the like. The reception information filter module 114 may include a filter to be applied according to a corresponding app type when an app is activated based on the direct communication module 110. For example, the reception information filter module 114 may include at least one of a music file-providing filter to be applied when a music app is executed, and a movie file providing filter to be applied when a video app is executed. Filter information arranged in the music file providing filter or the movie file providing filer may be extracted and predefined from corresponding file information. Alternatively, the filter information arranged in the filter may be written or corrected by the user. When a plurality of filters is included, the reception information filter module 114 may include a switch, which can select a particular filter.

The filter selector 117 may select at least one filter included in the transmission information filter module 113 according to a predetermined condition. For example, when a particular app is executed based on the activated direct communication module 110, the filter selector 117 may first select a filter supporting a corresponding app function among a plurality of filters included in the transmission information filter module 113. The filter selector 117 may select a particular music file request filter when a music reproduction player is activated or select a particular movie file request filter when a video reproduction player is activated.

The filter selector 117 may select a time related filter, a place related filter, or device matching filters according to a time, place, or device characteristic. For example, when a particular time arrives, the filter selector 117 may select a filter related to the corresponding time. The filter selector 117 may identify position information of the electronic device 100 and select the place related filter when a current position is a position related to a particular filter. The filter selector 117 may select the device-matching filter when a particular time arrives in a state where the electronic device 100 is located at a particular place. The time related filter, the place related filter, and the device matching filter selected by the filter selector 117 may be arranged in at least one of the reception information filter module 114 and the transmission information filter module 113 according to the corresponding filter characteristic.

The time related filter may be a filter supporting processing of data to be received or transmitted at a predetermined time. For example, the time related filter may include a filter related to transmission or reception of music information selected at 7:00 am, a music information transmission/reception filter selected at 12 noon, and a cultural lift information reception filter or a particular public transportation information reception filter selected at 7:00 pm. The time related filter may include a movie content transmission/reception filter selected at 2:00 pm or an advertisement transmission/reception filter selected at 6:00 pm.

The place related filter may include a filter, which can be selected in a particular place, predefined, or written by the user. The place related filter may include various filters such as a home broadcasting information reception filter, a firm broadcasting information transmission or reception filter, an area guidance information transmission/reception filter, a restaurant information transmission/reception filter, a movie information transmission/reception filter, and a parking related information reception filter according a place.

According to an embodiment, the place related filter may include a security filter that differently defines a content list which can be provided to another electronic device according to approach to another electronic device. The approach to another electronic device may be determined through a strength of a transmitted/received signal between the direct communication module 110 and another electronic device or transmission/reception of position information of each device. In connection with particular filter selection in a particular place, the electronic device 100 may include a position information collection module (not shown) supporting position information collection. The position information collection module may be connected to the control module 160 and provide position information to the control module 160 and may be connected to the situation processing module 170 and provide collected position information to the situation processing module 170.

The device-matching filter may include a transmission and reception filter searching for another electronic device registered in a phone book, a transmission and reception filter searching for another electronic device registered in a messenger program, and a transmission or reception filter searching for another electronic device having a message transmission/reception history. The device-matching filter may include a transmission filter searching for another electronic device having a particular name input by the user or predefined or a reception filter receiving a search for an electronic device having a particular name. The device-matching filter may operate in line with the place related filter or the time related filter. For example, the device-matching filter may be used as a filter related to a particular device search in at least one situation of a particular time and a particular place.

The electronic device 100 may provide a filter writing screen related to filter writing or generation. The filter writing screen may include an input box through which at least one of filter application time information, filter application place information, another electronic device filter application information, and filter characteristic definition information can be written. The user may input at least one of a transmission or reception scheme, a place, and a time related to particular data sharing, and may generate a filter. According to an embodiment, the data sharing may include music sharing, movie sharing, coupon sharing, notification or notice sharing, or traffic information sharing. In an embodiment, the generated filter may be stored in the storage module 150 or loaded to the direct communication module 110. One of the filters stored in the storage module 150 may be selected according to information collected by the situation processing module 170 and provided to the direct communication module 110.

The interface 116 may transmit a signal between the direct communication module 110 and the situation processing module 170. Further, according to an embodiment, the interface 116 may transmit a signal between the direct communication module 110 and the control module 160. The interface 116 may transmit a signal related to a filter replacement or a filter correction of the transmission information filter module 113 and the reception information filter module 114. The interface 116 may transmit data transmitted by the control module 160 to the transmission information filter module 113. The interface 116 may transmit data received by the reception module 112 and filtered by the reception information filter 112 to the control module 160.

According to various embodiments, the electronic device 100 may include the transmission and reception modules 111 and 112, which transmit or receive data by using a communication channel formed based on wireless communication, and at least one filter 115 having filter information related to selection of at least one of data transmitted through the communication channel formed by the transmission module 111 and data received through the communication channel formed by the reception module 112.

According to various embodiments, the filter 115 may be applied to at least one of the reception information filter module 114, which selects data to be received through the reception module 112 and the transmission information filter module 113 which selects data which can be transmitted through the transmission module 111.

According to various embodiments, the electronic device 100 may further include the filter selector 117 which selects filter information for selecting at least one data of the transmission information filter module 113 and the reception information filter module 114 according to at least one of a time, a place, and information on another electronic device connected through the direct wireless communication.

According to various embodiments, the electronic device 100 may further include a control module configured to control at least one of the transmission module 111, the reception module 112, and the filter information selector 117.

According to various embodiments, when data filtered by the filter arranged in the transmission information filter module 113 is received through the reception module 112, the control module 160 may change an operation state of the control module 160. Further, when data filtered by the filter arranged in the reception information filter module 114 is received through the reception module 112 or a content corresponding to the received data is transmitted through the transmission module 111, the control module 160 may maintain a previous operation state of the control module 160.

According to various embodiments, the control module 160 may configure devices transmitting data filtered by the filter 115 as a candidate to be connected through wireless communication.

According to various embodiments, the electronic device 100 may further include the display module 140, which displays at least one data received by the reception information filter module 114.

According to various embodiments, the electronic device 100 may further include the sensor module 190 including at least one sensor generating a particular sensor signal corresponding to situation information of the electronic device 100 and the situation processing module 170 which identifies the situation information based on the signal generated in the sensor module 190 and controls to apply at least one filter 115 to the transmission information filter module 113 or the reception information filter module 114 according to the situation information.

According to various embodiments, the filter 115 may have at least one grade corresponding to a permission degree of approach by another device.

According to various embodiments, the electronic device 100 may further include the control module 160, which controls the device, and the control module 160 may include at least one of a first data processing module 60, which controls application of the filter, a second data processing module 70, which selects at least one electronic device according to a predetermined condition or determines a communication connection order of other electronic devices when at least one of other electronic devices is found, and a third data processing module 80, which broadcasts at least one filter information and controls to provide an event or a content to another electronic device responding to at least a part of the filter information.

In various embodiments, when a machine-readable storage device storing commands executes the commands by at least one processor, the machine-readable storage device is configured to allow the at least one processor to perform at least one operation. At least one operation may include a first data processing operation of selectively processing at least one data transmitted and received through wireless communication based on a filter in which particular information is arranged, a second data processing operation of selecting only some of a plurality of other electronic device found through the wireless communication according to a predefined condition or determining communication connection orders of other electronic devices, so as to control data transmission, and a third data processing operation of sequentially broadcasting data fragments to other electronic devices through the wireless communication and providing a particular event or content to other electronic devices which sequentially respond to the data fragments or respond to at least a part of the data fragments.

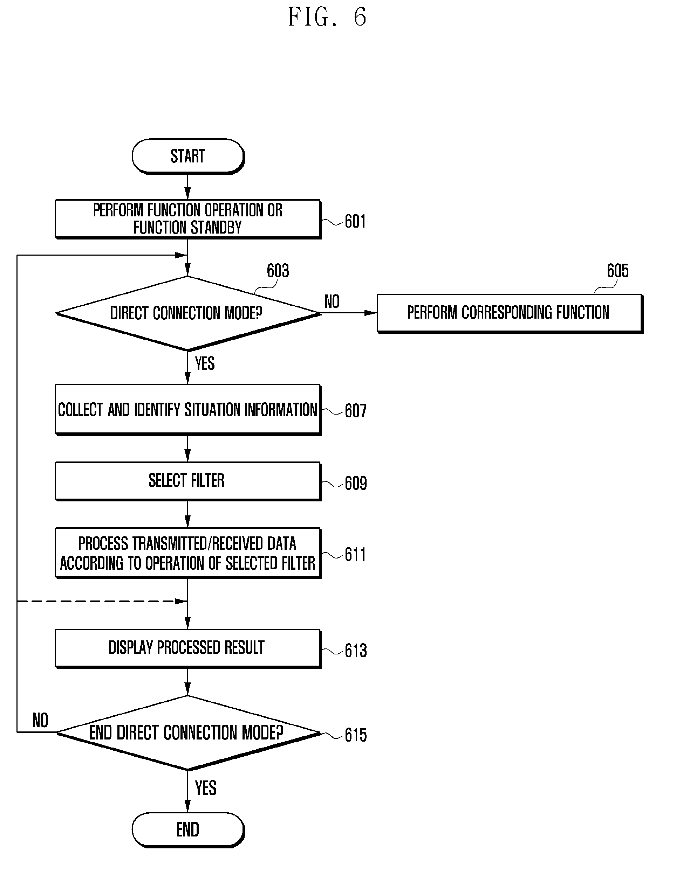

FIG. 6 is a flowchart illustrating a filter based data processing method according to various embodiments.

According to various embodiments, in operation 601, for example, the control module 160 may perform a particular function according to preset schedule information or a particular function according to a user's request. Alternatively, the control module 160 may perform a function standby in operation 601. According to an embodiment, the control module 160 may output a standby screen or activate a particular function according to a request and control to output a screen of the activated function on the display module 140. According to an embodiment, the control module 160 may maintain a sleep state corresponding to a turn-off state of the display module.

In operation 603, for example, the control module 160 may identify whether an input event related to a direct connection mode activation is generated. During such an operation, the control module 160 may proceed to operation 605 if there is no generation of the event related to the direct connection mode configuration. In operation 605, for example, the control module 160 may control to perform a preset function or a particular function. According to an embodiment, the control module 160 may maintain the activation of the function being executed in operation 601. The input event related to the direct connection mode activation may include an event related to a selection and activation of a particular app executed based on the direct communication module 110. For example, the electronic device 100 may provide a screen, which can select an app based on the direct communication module 220 on the display module 140. According to an embodiment, the electronic device 100 may output an icon or a menu item corresponding to each app on the display module 140. When a touch event related to the app selection is generated, the control module 160 may recognize the corresponding touch event the event related to the direct connection module activation.

In operation 603, for example, when a preset particular filter operation is requested, the control module 160 may recognize the request as the event related to the direct connection mode activation. As described above, the electronic device 100 may operate a time related filter or a place related filter. When a situation matching the time and place configured during such an operation arrives, the control module 160 may perform the direct connection function according to an application of the corresponding filter. According to various embodiments, the control module 160 may automatically activate a direct connection mode. When the direct connection mode is automatically activated, operation 603 may be omitted.

In operation 607, for example, when the event related to the direct connection mode activation is generated, the control module 160 may identify situation information. According to an embodiment, the situation processing module 170 may collect situation information of the electronic device 100 by using at least one sensor or identifying pre-stored schedule information or a current time according to the direct connection mode activation. When the direct connection mode is automatically activated, the control module 160 may perform the situation information identifying operation in real time or according to a regular period in operation 607.

In operation 609, for example, the control module 160 may select a filter according to the situation information. According to an embodiment, the control module 160 may select at least one of the transmission information filter and the reception information filter according to type information of a particular app of which the direction connection mode activation has been requested. Alternatively, the situation processing module 170 may select a filter according to the situation information. Alternatively, the direct communication module 110 may select a filter according to the situation information. According to various embodiments, the direct communication module 110 may receive the situation information from the situation processing module 170. A software module for selecting a particular filter according to situation information may be mounted to the direct communication module 110.

In operation 611, for example, the control module 160 may process transmitted/received data by operating the selected filter. According to an embodiment, the control module 160 may select a traffic information transmission filter in operation 609 and receive traffic information from another electronic device adjacently located in operation 611. In operation 613, for example, the control module 160 may control to output a result according to the data processing on the display module 140. According to an embodiment, the control module 160 may control to output the traffic information on the display module 140.

According to an embodiment, when a short-range game participant recruitment filter is selected in the filter selecting operation described in operation 609, the control module 160 may broadcast the recruitment of participants to join a particular game in operation 611. When a response to the game participation is received from another electronic device, the control module 160 may form a communication channel with the corresponding electronic device and perform a control related to the game performance, and may process a screen output according to the control in operation 613.

In operation 615, for example, the control module 160 may identify whether an input event related to an end of the mode is generated. When there is no generation of the input event related to the end of the mode, the control module 160 may proceed to operation 603. Alternatively, the control module 160 may control to maintain operation 613. The input event related to the end of the mode may include a request for ending the particular game, a request for ending the app based on the direct communication module 110 and the like.

According to various embodiments, a data transmitting/receiving method using wireless communication may include an operation of selecting a transmission filter for filtering data to be transmitted, based on wireless communication, an operation of selecting a reception filter for filtering data to be received, based on wireless communication, an operation of transmitting data filtered through the transmission filter, or an operation of receiving data filtered through the reception filter.

According to various embodiments, the filter selecting operation may include an operation of selecting filter information for identifying at least one data of the transmission filter and the reception filter according to at least one of a time, a place, and information of another electronic device connected through direct wireless communication.

According to various embodiments, the method may further include an operation of changing an operation state of the control module 160 when the data filtered through the transmission filter is received.

According to various embodiments, the method may further include an operation of maintaining a previous operation state of the control module 160 when the data filtered through the reception filter is received or a content corresponding to the received data is transmitted.

According to various embodiments, the method may further include an operation of collecting a particular sensor signal generated according to a situation of the electronic device 100, an operation of collecting situation information based on the collected sensor signal, and an operation of selecting a particular filter according to the collected situation information.

According to various embodiments, the method may further include an operation of configuring the filter information as a grade in which a search cannot be performed by another electronic device, an operation of configuring the filter information as a grade in which predetermined security is processed for reception, and operation of configuring the filter information as a grade in which the information is automatically transmitted.

According to various embodiments, the method may further include an operation of configuring devices transmitting the data filtered by the filter as a candidate to be connected through the wireless communication.

According to various embodiments, the method may further include an operation of displaying at least one received data filtered by the reception filter.

According to various embodiments, the method may further include an operation of dividing the filtered information into data fragments, and an operation of sequentially broadcasting the data fragments to another electronic device and providing a particular event or content to another electronic device which responds to the data fragments or responds to a part of the broadcasted data fragments.

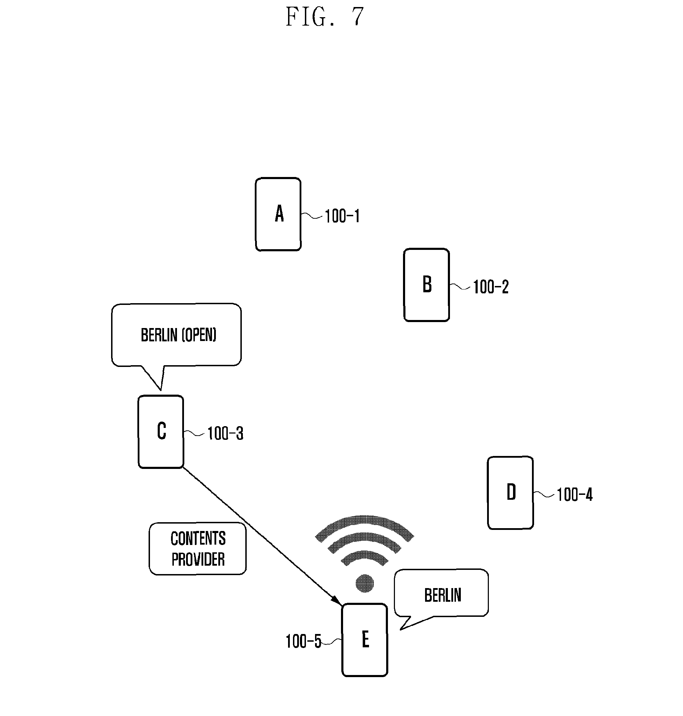

FIG. 7 illustrates filter based data transmission/reception according to various embodiments.

In the following description, electronic devices 100-1, 100-2, 100-3, 100-4, and 100-5 may be devices including a direct communication module, which can directly perform Device to Device (D2D) communication without passing through a network or without an operation of a base station. The electronic devices 100-1, 100-2, 100-3, 100-4, and 100-5 may be devices including the components described in FIGs. 1 and 2 or the components described in FIG. 3 or 5.

Referring to FIG. 7, first to fifth electronic devices 100-1, 100-2, 100-3, 100-4, and 100-5 may be arranged within a predetermined range. The predetermined range may be an area in which communication channels can be formed between the first to fifth electronic devices 100-1, 100-2, 100-3, 100-4, and 100-5 based on the direct communication module 110 without an operation of the base station. All of the first to fifth electronic devices 100-1, 100-2, 100-3, 100-4, and 100-5 may include the direct communication module 110 and have a communication operation standby state.

According to an embodiment, the fifth electronic device 100-5 may enter the predetermined range in which the first to fourth electronic device 100-1, 100-2, 100-3, and 100-4 are located. The fifth electronic device 100-5 may activate the direct communication module 110 to make a request for transmitting a particular file while entering the predetermined range in which other electronic devices are located. For example, the fifth electronic device 100-5 may make a request for transmitting at least one file related to a movie "Berlin". The fifth electronic device 100-5 may apply a filter making a request for a file corresponding to the movie having a title of "Berlin" to the transmission information filter module 113. For example, the fifth electronic device 100-5 may apply a filter making a request for a file including a text of "Berlin" in a file name or content to the transmission information filter module 113. After the application to the transmission information filter module 113, the fifth electronic device 100-5 may broadcast the file request through the transmission module 111 according to a predetermined period or in real time.

The first to fourth electronic devices 100-1, 100-2, 100-3, and 100-4 may receive the request for transmitting the movie "Berlin" from the fifth electronic device 100-5. When the movie having the title of "Berlin" is found in the storage module, the first electronic device 100-1 may transmit the corresponding movie file to the fifth electronic device 100-5. The first electronic device 100-1 may automatically form a communication channel with the fifth electronic device 100-5 in response to the request of the fifth electronic device 100-5 and automatically transmit the corresponding movie file.

According to an embodiment, the remaining electronic devices as well as the first electronic device 100-1 may store the movie "Berlin". Then, the fifth electronic device 100-5 may select an electronic device to receive the movie file from the first to fourth electronic devices 100-1, 100-2, 100-3, and 100-4 according to at least one predetermined condition. For example, at least one condition may include at least one of a motion situation of the devices, a previous communication history between the devices, a user's designation, and a radio environment between the devices. When another electronic device, having previously received or transmitted data is included in the first to fourth electronic devices 100-1, 100-2, 100-3, and 100-4, the previous communication history condition may be used to preferentially select the corresponding electronic device by the fifth electronic device 100-5. In connection with the user's designation, the fifth electronic device 100-5 may output a list of the first to fourth electronic devices 100-1, 100-2, 100-3, and 100-4 connected based on the direct communication module 110 on the display module 140. The radio environment condition may be used to select the electronic device currently having a most excellent radio environment with the fifth electronic device. The radio environment condition may include a wireless received signal strength, a data transmission rate, an error rate or the like. At least one of the predetermined conditions may be used as an optimal condition for grouping at least one of other electronic devices as a data transmission/reception candidate group, or may be used as an optimal condition for selecting another electronic device to which data is transmitted.

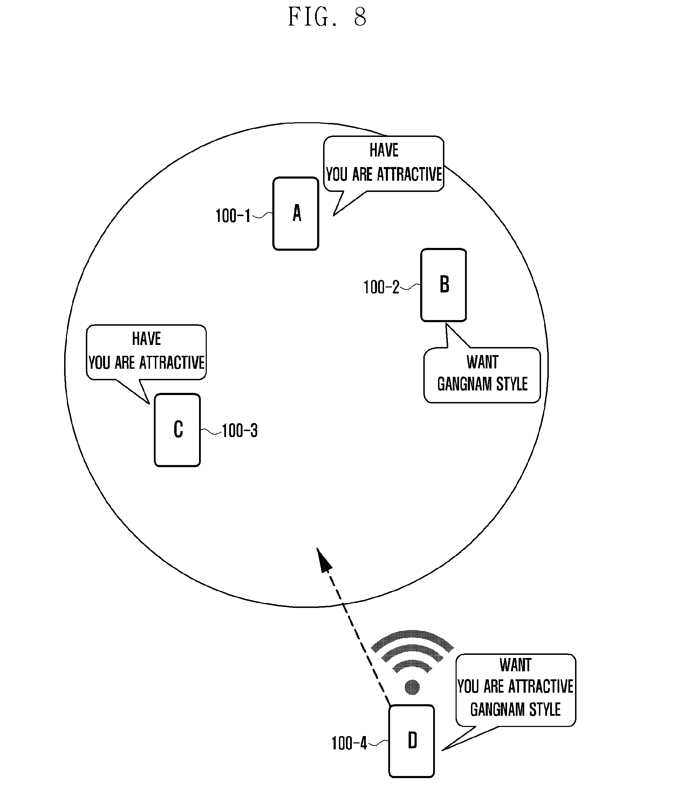

FIG. 8 illustrates filter based data transmission/reception according to another embodiment of the various embodiments.

In the following description, the electronic devices 100-1, 100-2, 100-3, and 100-4 may be devices including a direct communication module which can directly perform Device to Device (D2D) communication without passing through a network or without an operation of a base station. The electronic devices 100-1, 100-2, 100-3, and 100-4 may be devices including the components described in FIGs. 1 and 2 or the components described in FIG. 3 or 5.

Referring to FIG. 8, the first to third electronic devices 100-1, 100-2, and 100-3 may form a predetermined group based on a mobile radio access point. Further, the fourth electronic device 100-4 may enter a predetermined area in which electronic devices included in a predetermined group are located. Then, the first to fourth electronic devices 100-1, 100-2, 100-3, and 100-4 may share information on which electronic device desires to receive which data and information on which electronic device has which data by transmitting/receiving information on data which the devices 100-1, 100-2, 100-3, and 100-4 desire. During such an operation, the first to third electronic devices 100-1, 100-2, and 100-3 may pre-configure the reception information filter module 114 and the transmission information filter module 113. A filter including list information on data, which a user of the corresponding electronic device desires may be arranged or written in the reception information filter module 114. A filter including data list information, which the corresponding electronic device can transmit, may be arranged or written in the transmission information filter module 113.

Based on FIG. 8, the first electronic device 100-1 and the third electronic device 100-3 operate a reception information filter (Want), which desires to receive a file having a file name of "you are attractive" corresponding to filter information. The second electronic device 100-2 operates a reception information filter (Want) in which information desiring to receive a file having a file name of "gangnam style" corresponding to filter information. The fourth electronic device 100-4 operates a transmission information filter (Have), indicating possession of the files "you are attractive" and "gangnam style" and possibility of provision of the corresponding files.

When the fourth electronic device 100-4 enters a group of the first to third electronic devices 100-1, 100-2, and 100-3 and transmits/receives information on a filter through the direct communication module 110, the fourth electronic device 100-4 may share the above-described information. For example, the file "gangnam style" stored in the fourth electronic device 100-4 may be automatically transmitted to the second electronic device 100-2. The file "you are attractive" stored in the fourth electronic device 100-4 may be automatically transmitted to the first electronic device 100-1 or the third electronic device 100-3. The first to fourth electronic devices 100-1, 100-2, 100-3, and 100-4 may broadcast information on the configured filter according to a predetermined period or in real time.

According to an embodiment, when a file transmission scheme is configured as "transmission according to selection after notification", the fourth electronic device 100-4 may output information indicating a request for transmitting a particular file by a particular electronic device. When transmission of the corresponding file is accepted by the user, the fourth electronic device 100-4 may transmit data corresponding to the corresponding file. According to an embodiment, the data transmission/reception may be performed according to payment of a predetermined credit. The credit may be a content payment means, such as electronic money or electronic coin. For example, the first electronic device 100-1 may ask about a predetermined credit payment intention while making a request for transmitting the file "you are attractive" to the fourth electronic device 100-4. Alternatively, the first electronic device 100-1 may make payment through a predetermined credit determined by the fourth electronic device 100-4 and make a request for transmitting the file "you are attractive". The fourth electronic device 100-4 may automatically transmit the file "you are attractive" to the first electronic device 100-1 having made payment through the predetermined credit without a separate accept operation.

In the above-described embodiment, an example in which a file name is defined as filter information has been described. The filter information may be defined as a particular category. For example, the filter information may be defined as "music", "movie", "book" or the like. For example, when the first electronic device 100-1 configures "music" in the transmission information filter, the first electronic device 100-1 may automatically receive at least a part of the music files included in other electronic devices. Alternatively, the first electronic device 100-1 may receive at least a part of lists of the music files included in other electronic devices and output the part in a list form on the display module. Then, the user may identify the corresponding list and select a file, which the user desires to transmit. The first electronic device 100-1 may perform a process of receiving files selected by the user from other electronic devices. During such an operation, when a plurality of other electronic devices having a file desired to be received are generated as a data transmission/reception candidate group, the first electronic device 100-1 may select another particular electronic device by applying an optimal condition and receive a file from the selected electronic device.

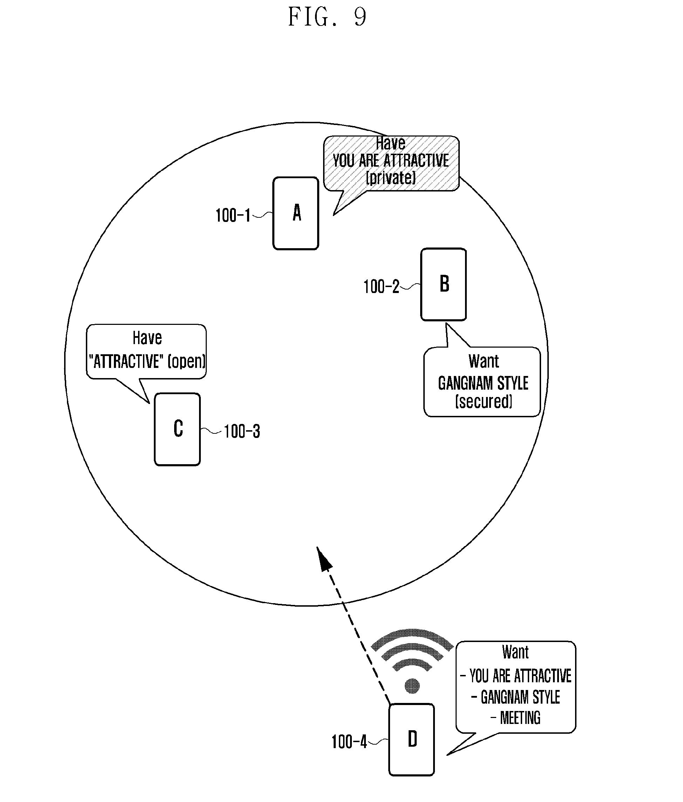

FIG. 9 illustrates filter based data transmission/reception according to another embodiment of the various embodiments.

In the following description, the electronic devices 100-1, 100-2, 100-3, and 100-4 may be devices including a direct communication module which can directly perform Device to Device (D2D) communication without passing through a network or without an operation of a base station. The electronic devices 100-1, 100-2, 100-3, and 100-4 may be devices including the components described in FIGs. 1 and 2 or the components described in FIG. 3 or 5.

Referring to FIG. 9, the first to third electronic devices 100-1, 100-2, and 100-3 may be arranged within a predetermined range or the fourth electronic device 100-4 may enter a predetermined group formed using a mobile radio access point. The entrance operation of the fourth electronic device 100-4 may be an operation of activating the direct communication module 110 and transmitting a predetermined broadcast within a distance range of the direct communication module 110. In an operation of configuring the reception information filter, the first to third electronic devices 100-1, 100-2, and 100-3 may configure a grade according to each data. For example, the first to third electronic devices 100-1, 100-2, and 100-3 may configure first to third grades according to each data.

According to an embodiment, the first electronic device 100-1 may have a filter indicating that the first electronic device 100-1 has the file having the file name of "you are attractive" configured as a private grade. The grade may be configured by a wish of the user. However, when the corresponding file has an inherent characteristic, for example, a Digital Right Management (DRM) configuration characteristic, the grade may be automatically allocated.

The private grade may be a grade in which other electronic devices cannot identify whether the corresponding file is stored in the first electronic device 100-1. The private grade may be a grade in which the corresponding file cannot be transmitted to another electronic device. When a filter having a private grade file is configured, the first electronic device 100-1 may control not to broadcast file information of the corresponding grade.

The second electronic device 100-2 may have a filter informing that the second electronic device 100-2 has the file having the file name of "gangnam style" configured as a secured grade. The secured grade may be a grade in which a predefined security operation is required. For example, the secured grade may be a grade in which a request for performing a security process is made by inputting a predefined password when a content access request is generated and an access to a content stored in the electronic device is allowed when the security process is successfully performed.

The third electronic device 100-3 may have a filter indicating that the third electronic device 100-3 has a file having a file name of "meeting" configured as an open grade. The open grade may be a grade in which other electronic devices search for the file, make a request for transmitting the file, and receive the file.

When the fourth electronic device 100-4 enters a predetermined position in which the first to third electronic devices 100-1, 100-2, and 100-3 are arranged and thus has a communication possible state, the fourth electronic device 100-4 may receive filter information from each of the first to third electronic devices 100-1, 100-2, and 100-3. The first electronic device 100-1 may not provide information on the file "you are attractive". The fourth electronic device 100-4 receives information on the file "gangnam style" provided by the second electronic device 100-2 together with information indicating the corresponding file is in a "secured state" and display the information on the display module 140 in a predetermined form of an image or text. The fourth electronic device 100-4 may receive information on the file "meeting" and display the file on the third electronic device 100-3.

When it is assumed that the fourth electronic device 100-4 has a transmission information filter, which desires the files "you are attractive", "gangnam style", and "meeting", the fourth electronic device 100-4 may automatically receive the file "meeting" from the third electronic device 100-3 or receive the corresponding file according to a confirmation or permission of the third electronic device 100-3.

According to an embodiment, the fourth electronic device 100-4 may transmit a predetermined pass code to the second electronic device 100-2 in connection with the reception of the file "gangnam style". When the pass code provided by the fourth electronic device 100-4 matches a preset pass code, the second electronic device 100-2 may transmit the file "gangnam style" to the fourth electronic device 100-4. In any embodiment, a search for and transmission of the file "you are attractive" may not be performed by the grade of the corresponding file. The fourth electronic device 100-4 may receive a pass code from the second electronic device 100-2 through a separate message. Alternatively, when the fourth electronic device 100-4 has a previous communication history with the second electronic device 100-2, the fourth electronic device 100-4 may automatically transmit a predefined pass code to the second electronic device 100-2 based on the previous communication history. Alternatively, the pass code may be directly input by the user.

When the fourth electronic device 100-4 transmits a file transmission request and particular pass code information, the second electronic device 100-2 having the file "gangnam style" may compare the received pass code information with the predefined pass code information. When the compared pass codes match each other, the second electronic device 100-2 may automatically transmit the file "gangnam style" to the fourth electronic device 100-4 or output a popup window asking of the user about whether to allow the transmission after notification.

According to various embodiments, when the electronic devices support filter based data processing, the type or a name of data to be transmitted using a filter configured by the user or a filter selected by situation information may be automatically configured. The electronic devices may share data with a neighboring electronic device by broadcasting information written in the corresponding filter by using the direct communication module 110.

According to an embodiment, when "jazz festival" is configured in schedule information of a particular electronic device or a number of searches for particular musician information is a predetermined number or more, the electronic devices may automatically write schedule information or search information as filter information and perform a broadcast related to data sharing based on the filter information. Further, when a particular place and time is written in the schedule information, if the electronic devices determine the electronic devices are located in the corresponding time and the corresponding place, the electronic devices may share information on the corresponding place to other electronic devices connected based on the direct communication module 110. The electronic devices may broadcast position information of the particular place, a position tag and the like, receive information such as a particular picture or text from another electronic device based on the direct communication module 110 according to the position information of the particular place band the position tag, and store or display the received information.

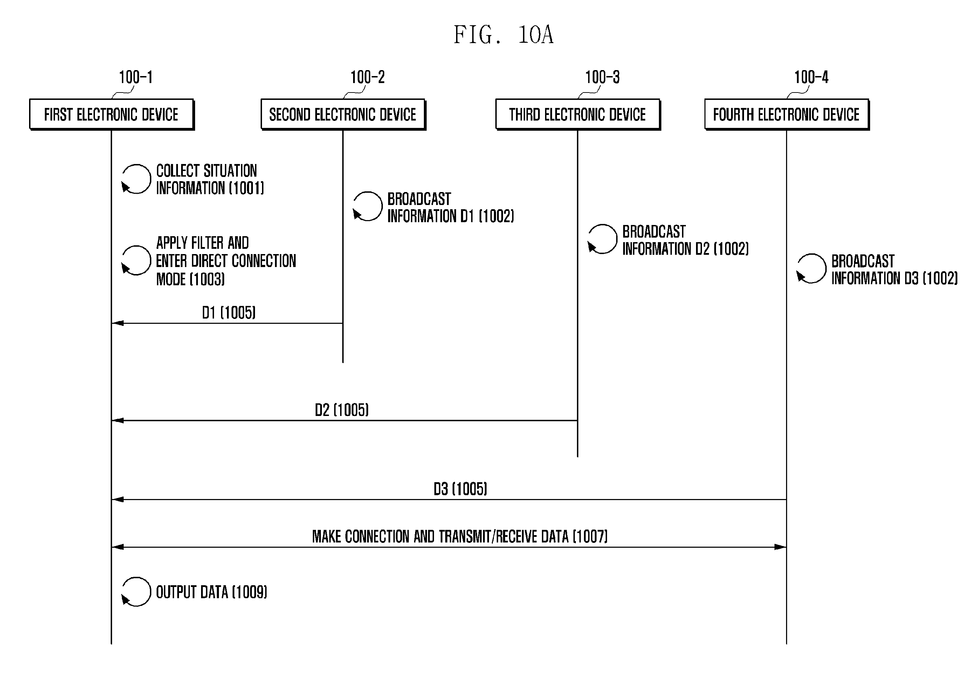

FIG. 10A illustrates an operation of the reception information filter according to various embodiments.

In the following description, the electronic devices 100-1, 100-2, 100-3, and 100-4 may be devices including a direct communication module which can directly perform Device to Device (D2D) communication without passing through a network or without an operation of a base station. The electronic devices 100-1, 100-2, 100-3, and 100-4 may be devices including the components described in FIGs. 1 and 2 or the components described in FIG. 3 or 5.

Referring to FIG. 10A, in operation 1001, for example, the first electronic device 100-1 may select a predefined filter in connection with situation information collected by the situation processing module 170 in a predetermined time or a predetermined place. For example, the first electronic device 100-1 may collect preset schedule information to be executed in a current time. Alternatively, the first electronic device 100-1 may collect schedule information set to be executed in a current place. When the situation information is collected, in operation 1003, for example, the first electronic device 100-1 may apply a filter according to the situation information and enter the direct connection mode according to the filter application. According to an embodiment, the first electronic device 100-1 may activate the direct communication module 110 to receive data from other electronic devices.

In operation 1002, for example, the second electronic device 100-2, the third electronic device 100-3, or the fourth electronic device 100-4 may broadcast particular data. According to various embodiments, in operation 1002, the second electronic device 100-2 may broadcast D1 information and the third electronic device 100-3 may broadcast D2 information, and the fourth electronic device 100-4 may broadcast D3 information. In operation 1005, for example, the first electronic device 100-1 having the activated direct communication module 110 may receive at least one of the D1 information broadcasted by the second electronic device 100-2, the D2 information broadcasted by the third electronic device 100-3, and the D3 information broadcasted by the fourth electronic device 100-4.

In operation 1003, for example, when the first electronic device 100-1 receives information from other electronic devices, the first electronic device 100-1 may perform filtering by using a configured filter. According to an embodiment, when the applied transmission information filter is a traffic information filter, the first electronic device 100-1 may collect the D3 information provided by the electronic device providing traffic information, for example, the fourth electronic device 100-4 among the other electronic devices. The first electronic device 100-1 may ignore the D1 information, or the D2 information provided by the second electronic device 100-2, or the third electronic device 100-3 in connection with the application of the transmission information filter.

In operation 1007, for example, when it is identified that the fourth electronic device 100-4 is the device providing the traffic information, the first electronic device 100-1 may form a communication channel with the fourth electronic device 100-4. The first electronic device 100-1 may receive real time traffic information from the fourth electronic device 100-4. In operation 1007, the first electronic device 100-1 may configure at least some of a plurality of other electronic devices transmitting data as a device candidate group to be connected through wireless communication by using a filter. For example, the first electronic device 100-1 may configure a plurality of other electronic devices transmitting data defined in the filter as candidate devices to be connected through wireless communication related to the data reception.

In operation 1009, for example, the first electronic device 100-1 may control to output the received data on the display module. According to an embodiment, the first electronic device 100-1 may output the received data through at least one of a text, an image, and an audio signal. For example, the first electronic device 100-1 may output received real time traffic information on the display module 140 in the form of at least one of a text and an image. The first electronic device 100-1 may output the received data to the audio processing module 130 as an audio signal. The first electronic device 100-1 may output a vibration informing of the data reception.

In the above described operation, the fourth electronic device 100-4 may consider a method of transmitting the real time traffic information itself, but an amount of information broadcasted based on the direct communication module 110 may be restrictively designed. For example, in a case of the D1 to D3 information, data having a size equal to or smaller than a predetermined size may be broadcasted in connection with a type of information provided by each of the electronic devices, an information name, and identification information of an electronic device transmitting information. In the above described design environment, the first electronic device 100-1 may receive information including identification information corresponding to data having a size equal to or smaller than a predetermined size through a broadcasting scheme. The first electronic device 100-1 may identify the fourth electronic device 100-4 providing the traffic information by identifying the data having the size equal to or smaller than the predetermined size received through the broadcasting scheme. The first electronic device 100-1 may form a communication channel with the identified fourth electronic device 100-4 and transmit/receive data having a size larger than or equal to a predetermined size based on the formed communication channel.

According to another embodiment, in operation 1001, the first electronic device 100-1 may collect schedule information such as an appointment as situation information. For example, the first electronic device 100-1 may be located in a particular place written in the schedule information, and corresponding position information may be collected as the situation information. For example, the first electronic device 100-1 may select a device-matching filter as the transmission information filter in operation 1003. The device-matching filter may include identification information of another electronic device as described above. When the device-matching filter is applied and the first electronic device 100-1 enters the direct connection mode, the first electronic device 100-1 may receive information provided by other electronic devices. The first electronic device 100-1 may filter the information provided by other electronic devices by using the device-matching filter of the direct communication module 110. For example, the fourth electronic device 100-4 may be a device defined by the device-matching filter. The first electronic device 100-1 may ignore information provided by the second electronic device 100-2 and the third electronic device 100-3. When the D3 information provided by the fourth electronic device 100-4 matches the information defined by the device matching filter, the first electronic device 100-1 may be communication-connected with the fourth electronic device 100-4 in connection with transmission of data having a size larger than or equal to a predetermined size in operation 1007.

According to an embodiment, when the fourth electronic device 100-4 receives a communication connection request from the first electronic device 100-1, a state indicating that the first electronic device 100-1 is located within a predetermined range may be output through the display module 140 or other output means, for example, the audio processing module. Further, when the communication channel between the first electronic device 100-1 and the fourth electronic device 100-4 is formed, the first electronic device 100-1 may output a state indicating that the fourth electronic device 100-4 is located within a predetermined range through the display module 140. For example, the first electronic device 100-1 and the fourth electronic device 100-4 may transmit/receive position information and determine a current position of each other. The first electronic device 100-1 and the fourth electronic device 100-4 may include a position information collection module and pre-store map information to output collected position information and received position information on a map. According to an embodiment, when the communication channel based on the direct communication module 110 is formed, the first electronic device 100-1 or the fourth electronic device 100-4 may automatically attempt a call connection. According to an embodiment, the first electronic device 100-1 or the fourth electronic device 100-4 may transmit a message informing of an arrival to a counterpart electronic device automatically or after a confirmation of the user.

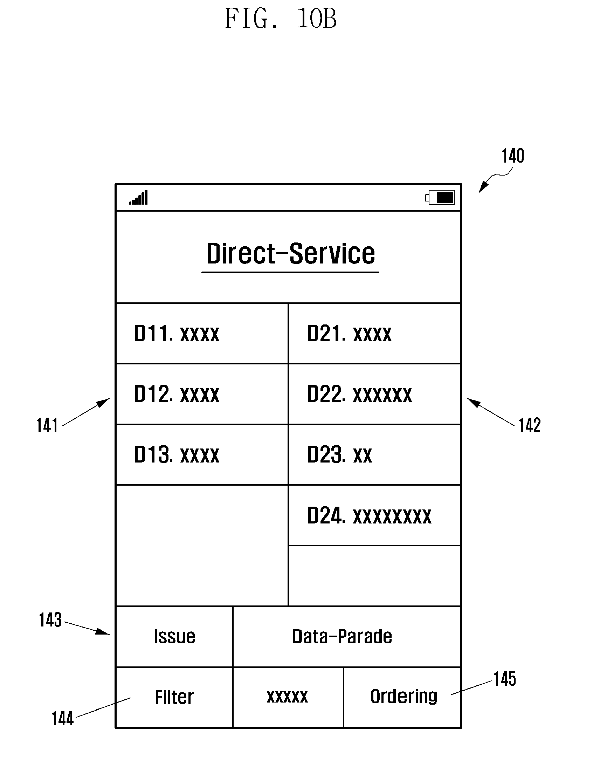

FIG. 10B illustrates an example of a screen, which can be provided in a filter based data processing operation according to various embodiments.

Referring to FIG. 10B, at least one (hereinafter, referred to as the electronic device 100) of the electronic devices according to various embodiments enters the direct connection mode, the electronic device may output information indicating a direct service on at least a part of a screen, for example, an upper part of the screen. The direct service may be changed to a different name or image according to a designer's intention or a user's control.

According to an embodiment, the electronic device 100 may receive predetermined data from other electronic devices located close to the electronic device 100 in response to the entrance of the direct connection mode. When the electronic device 100 does not apply a particular filter, the electronic device may receive all of various data broadcasted by other electronic devices. Alternatively, even when the electronic device 100 applies a filter including information corresponding to a higher category, the electronic device 100 may receive various data, which can be classified by sub-categories within the same category.

When the electronic device 100 receives a plurality of data, which can be classified into categories, the electronic device 100 may distinguish the plurality of received data based on a predetermined condition and output the distinguished data on the display module 140 so that the distinguished data can be identified. FIG. 10B illustrates an example in which data classified into two types are distinguishably displayed. For example, first category data 141 and second category data 142 may be displayed on the display module 140. The data classified into two categories are displayed herein, but various embodiments are not limited thereto. For example, the electronic device 100 may classify the data into two or more categories of data according to characteristics of the received data or classify the data into one category.

The first category data 141 may correspond to broadcast messages advertised by at least one of other electronic devices arranged in shops. The second category data 142 may correspond to messages broadcasted by a general user. At least one of the first category data 141 and the second category data 142 may be output on a screen together with predetermined information included in the corresponding data. For example, messages included in the first category data 141 may be output on the display module 140 together with at least one character related to an advertisement in a display operation. Similarly, messages included in the second category data 142 may be output on the display module 140 together with at least a part of characteristics corresponding to identification information of another electronic device in a display operation. According to various embodiments, in broadcasting messages related to the advertisement, an index value indicating the advertisement may be written in a header. According to an embodiment, in broadcasting messages of the general user, an index value indicating the general user may be written in a header.

According to an embodiment, the electronic device 100 may select information on a particular category among the collected data. Further, the electronic device 100 may output the collected particular category information as an item "Issue". According to an example illustrated in FIG. 10B, the electronic device 100 may output information related to "Parade" as an issue item 143. The issue item 143 may be, for example, information transmitted/received in an area where the electronic device 100 is located a predetermined number of times or more. For example, when the information "Parade" among pieces of information transmitted/received in the area where the electronic device 100 is located is most frequently transmitted, the display module 140 may output "Parade" as the issue item 143.

A filter item 144 may be an item providing information on a filter, which is currently applied. For example, when the filter item 144 is selected, the electronic device 100 may output a filter list from which another filter can be selected on a current screen or a separate window. A number of filter items 144 may be singular or plural according to a user's configuration or situation information.

An ordering item 145 may be an item related to an order control. For example, when the ordering item is selected, at least one of the first category data 141 and the second category data 142 may be updated. Further, the electronic device 100 may update the issue item 143 by analyzing data newly received at a time when the ordering item 145 is selected.

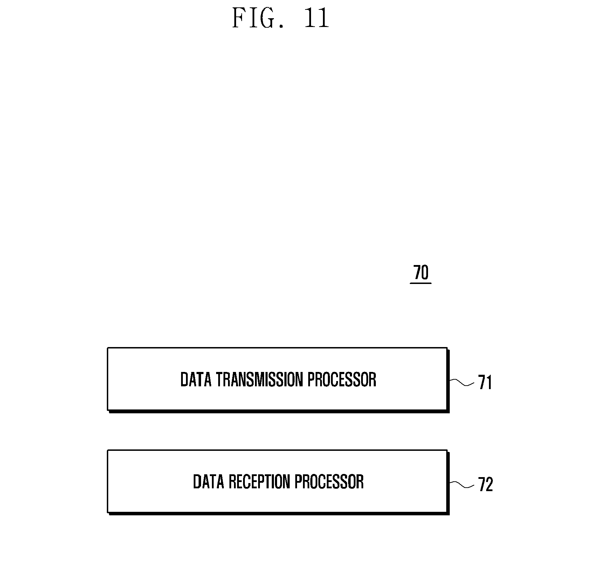

FIG. 11 illustrates a more detailed configuration of the relation based data processing module 70 according to various embodiments.

Referring to FIG. 11, the relation based data processing module 70 may include a data transmission processor 71 or a data reception processor 72. As described through FIG. 2, the relation based data processing module 70 may be provided separately from the control module 160 or may be provided together with other processing modules, for example, the optimal condition data processing module 80 or the filter based data processing module 60. A configuration of the electronic device to which the relation based data processing module 70 can be applied may be the same as that illustrated in FIG. 1 or 3. Alternatively, the remaining components of the electronic device described in FIG. 3 except for the situation processing module may be included.

For example, based on FIG. 3, the electronic device 100, to which the relation based data processing module 70 is independently applied, may include the direct communication module 110, the input module 120, the audio processing module 130, the display module 140, the storage module 150, and the control module 160, and the control module 160 may include the relation based data processing module 70. Further, the electronic device 100, to which the filter based data processing module 60 is also applied, may have the same configuration of the electronic device as that illustrated in FIG. 3.

The data transmission processor 71 may process a data transmitting operation in a relation based data processing operation. For example, the data transmission processor 71 may control the direct communication module 110 to broadcast particular data stored in the storage module 150 according to a regular period or in real time. In the electronic device 100, to which only the relation based data processing module is applied, the direct communication module 110 may include only the transmission module 111 and the reception module 112 among the components described through FIG. 5. In the electronic device 100 to which both the filter based data processing module 60 and the relation based data processing module 70 are applied, the direct communication module 110 may include all the components described through FIG. 5.

The data transmission processor 71 may output data fragments stored in the storage module 150 according to a regular period or repeatedly. The data fragments transmitted by the data transmission processor 71 may have a clear meaning when the data fragments are combined into one. As described above, when the broadcasting function is performed based on the direct communication module 110, an amount of data, which can be broadcasted, may be limited. A proper meaning may not be delivered through one broadcasting. For example, as illustrated in FIG. 7, when the fifth electronic device 100-5 broadcasts data of "Berlin", the third electronic device 100-3 having received the data can make various determinations on "Berlin". For example, a meaning, which an electronic device in a transmitter side (for example, the fifth electronic device 100-5 of FIG. 7) desires to deliver, may be a latest movie having a title of "Berlin". An electronic device in a receiver side (for example, the third electronic device 100-3 of FIG. 7) may recognize "Berlin" as a capital city "Berlin" of Germany. According to an embodiment, the data transmission processor 71 may divide data having a predetermined meaning by a combination of a plurality of words or terms and transmit the divided data. For example, the data transmission processor 71 may repeatedly transmit data of "movie", "Berlin", and "2013".

According to an embodiment, the data reception processor 72 may identify whether a response signal of corresponding data received from another electronic device, which has received the above-described information is generated. The data reception processor 72 may make a request for transmitting additional information to another electronic device in which the response signal is generated, to the data transmission processor 71. According to an embodiment, the data reception processor 72 may make a request for forming a communication channel with another electronic device having provided all responses to data transmitted by the data transmission processor 71. When the channel formation is requested, the data reception processor 72 may form the communication channel with another electronic device by using the direct communication module 110. The data reception processor 72, having formed the communication channel, may transmit data (for example, a movie file, a music file, a text message, or a document file such as a word processing file) to another electronic device.

As described above, the relation based data processing module 70 may receive a part of a plurality of data fragments and transmit another part of the data fragments to an electronic device having provided a response to the data fragments. The relation based data processing module 70 may control to form a communication channel in response to a request of the electronic device having received all the data fragments. The electronic device in the transmitter side may perform more effective data transmission since the electronic device forms the communication channel only with the electronic device having received all the data fragments. The electronic device in the receiver side may also identify the electronic device in the transmitter side, which can provide data in which the user is interested, through the data fragments. The electronic device in the receiver side may search for the electronic device in the transmitter side without identification of entire data.

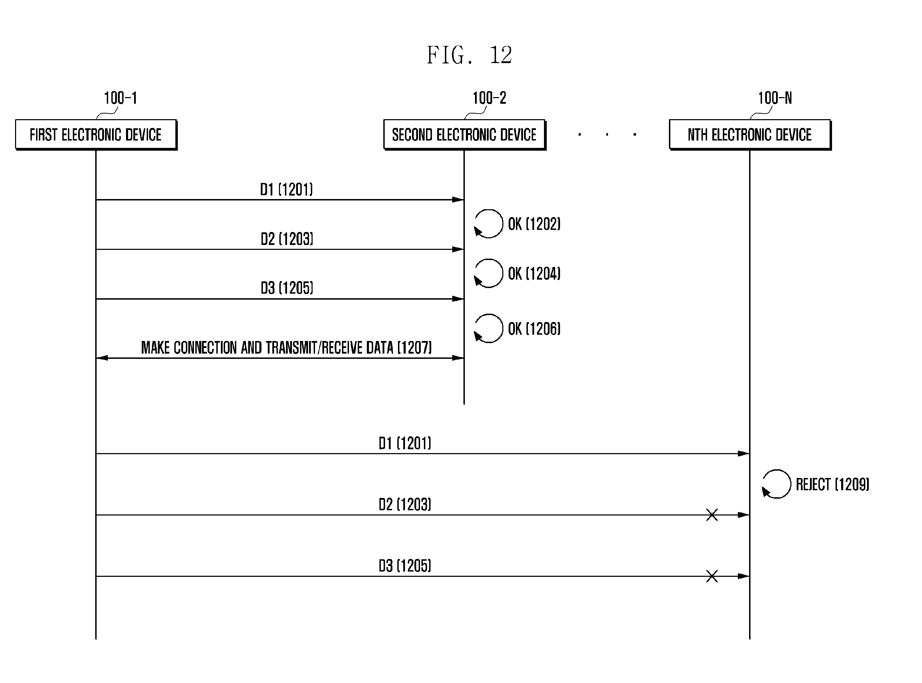

FIG. 12 illustrates a relation based data processing method according to various embodiments.

In the following description, the electronic devices 100-1, 100-2, ..., and 100-N may be devices including a direct communication module which can directly perform Device to Device (D2D) communication without passing through a network or without an operation of a base station. The electronic devices 100-1, 100-2, ..., and 100-N may be devices including at least one of the components described in FIGs. 1 and 2, FIGs. 3 to 5, or FIG. 11.

Referring to FIG. 12, in operation 1201, for example, the first electronic device 100-1 may broadcast a first data fragment D1. In operation 1203, the first electronic device 100-1 may broadcast a second data fragment D2. In operation 1205, the first electronic device 100-1 may broadcast a third data fragment D3. The first electronic device 100-1 may broadcast the first to third data fragments according to a regular period or repeatedly. The transmitted data fragments may be various types of information such as a predetermined word, term and the like as described above. Further, the data fragments may be an image having a predetermined size.

According to an embodiment, the second electronic device 100-2 or the Nth electronic device 100-N may receive at least one of the data fragments broadcasted by the first electronic device 100-1 and output information related to the received data fragment on the display module 140. In operation 1202, for example, when the second electronic device 100-2 receives the first data fragment D1 from the first electronic device 100-1, the second electronic device 100-2 may transmit a response signal (OK) to the first electronic device 100-1 according to a user's control. The response signal (OK) may be a response signal of each of the data fragments. In operations 1204 and 1206, for example, when the second electronic device 100-2 receives the second data fragment D2 and the third data fragment D3 from the first electronic device 100-1, the second electronic device 100-2 may transmit response signals (OK) corresponding to the second data fragment D2 and the third data fragment D3 to the first electronic device 100-1 according to a user's control.

For example, when the first electronic device 100-1 receives at least one response signal for the data fragments from the second electronic device 100-2, the first electronic device 100-1 may be communication-connected with the second electronic device 100-2 in operation 1207. The first electronic device 100-1 may transmit particular data, which the first electronic device 100-1 desires to transmit, to the second electronic device 100-2. Further, the first electronic device 100-1 may receive particular data, which the first electronic device 100-1 desires to receive, from the second electronic device 100-2.

In any example, the first electronic device 100-1 may not make a separate communication connection with the Nth electronic device 100-N which has no response signal or has provided a reject signal for the data fragments. Based on FIG. 12, when the first electronic device 100-1 broadcasts the first data fragment D1, the second data fragment D2, or the third data fragment D3, the Nth electronic device 100-N may be in a situation where the Nth electronic device 100-N can receive all the data fragments. However, the Nth electronic device 100-N may transmit a reject response for the corresponding data fragment to the first electronic device 100-1 or transmit no response according to a user's control. Further, the Nth electronic device 100-N may ignore the second data fragment D2 and the third data fragment D3 provided by the first electronic device 100-1.

The data transmitted based on the communication connection may be data having a different type or a different size from that of the broadcasted data. For example, the data transmitted through the communication connection may be a file having a size larger than or equal to a predetermined size, a large capacity of a movie file, an advertisement file, an audio file, a particular coupon file, an event winning notification file, or the like.

In any example, the first electronic device 100-1 may make a communication connection with another electronic device having provided response signals for the broadcasted data fragments a predetermined number of times or more, or another electronic device having provided a response signal for the data fragment lastly broadcasted among the plurality of data fragments and control to perform data transmission.

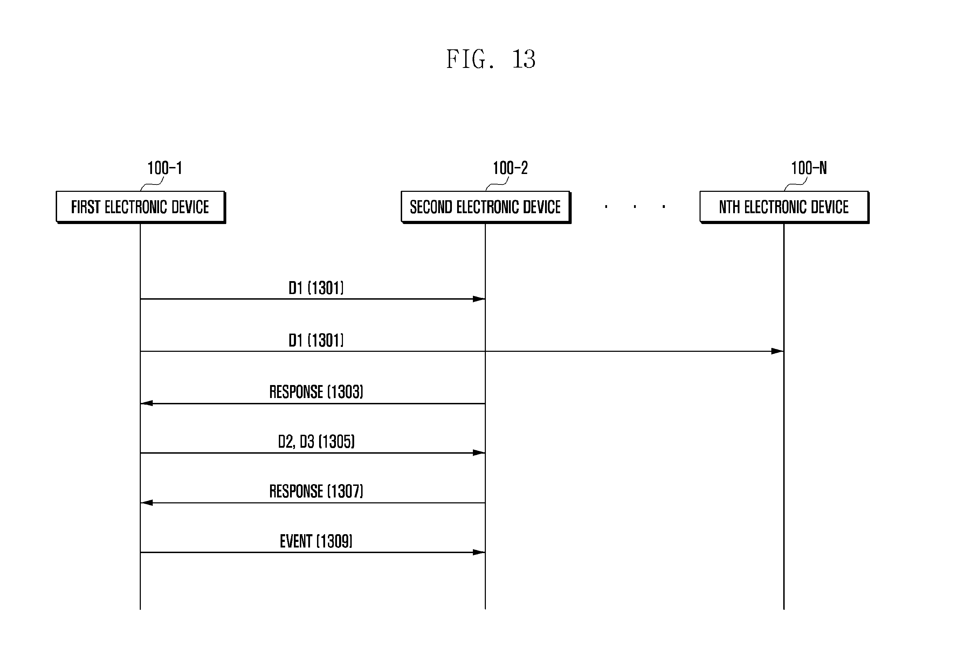

FIG. 13 illustrates a relation based data processing method according to another embodiment of the various embodiments.

In the following description, the electronic devices 100-1, 100-2, ..., and 100-N may be devices including a direct communication module which can directly perform Device to Device (D2D) communication without passing through a network or without an operation of a base station. The electronic devices 100-1, 100-2, ..., and 100-N may be devices including at least one of the components described in FIGs. 1 and 2, FIGs. 3 to 5, or FIG. 11.

Referring to FIG. 13, in operation 1301, for example, the first electronic device 100-1 may broadcast the first data fragment D1 to the second electronic device 100-2 and the Nth electronic device 100-N. When the second electronic device 100-2 receives the first data fragment D1, the second electronic device 100-2 may transmit a response to the first data fragment D1 to the first electronic device 100-1 in operation 1303. The response may be a response signal informing of reception of entire data. According to various embodiments, the second electronic device 100-2 may output the received first data fragment D1 on the display module 140. The second electronic device 100-2 may transmit the response signal to the first electronic device 100-1 according to a user's control. In any embodiment, the Nth electronic device 100-N may transmit no response.

When the first electronic device 100-1 receives the response from the second electronic device 100-2, for example, the first electronic device 100-1 may transmit the second data fragment D2 or the third data fragment D3 to the second electronic device 100-2 in operation 1305. The second electronic device 100-2 may output the received data fragment D2 or the third data fragment D3 on the display module 140. In operation 1307, for example, the second electronic device 100-2 may transmit the response signal to the first electronic device 100-1 according to a user's control. In operation 1309, for example, the first electronic device 100-1 may provide event information to the second electronic device 100-2 having provided the response signal.

The first electronic device 100-1 may transmit the data fragments through different transmission schemes. For example, the first electronic device 100-1 may broadcast the first data fragment D1 such that a plurality of unspecified electronic devices can receive the first data fragment D1. Further, the first electronic device 100-1 may transmit other data fragments to at least one second electronic device 100-2 having provided the response signal of the first data fragment D1 through a multicasting or unicasting scheme. In this case, the first electronic device 100-1 may not transmit the second data fragment D2 and the third data fragment D3 to the Nth electronic device 100-N. Further, the electronic device 100-1 may repeatedly broadcast only the first data fragment D1 and provide the remaining data fragments to another electronic device having provided the response to the first data fragment D1. In addition, the first electronic device 100-1 may receive all the data fragments, form a communication channel with another electronic device having provided the response to the data fragments, and transmit a particular type of data or predefined data.

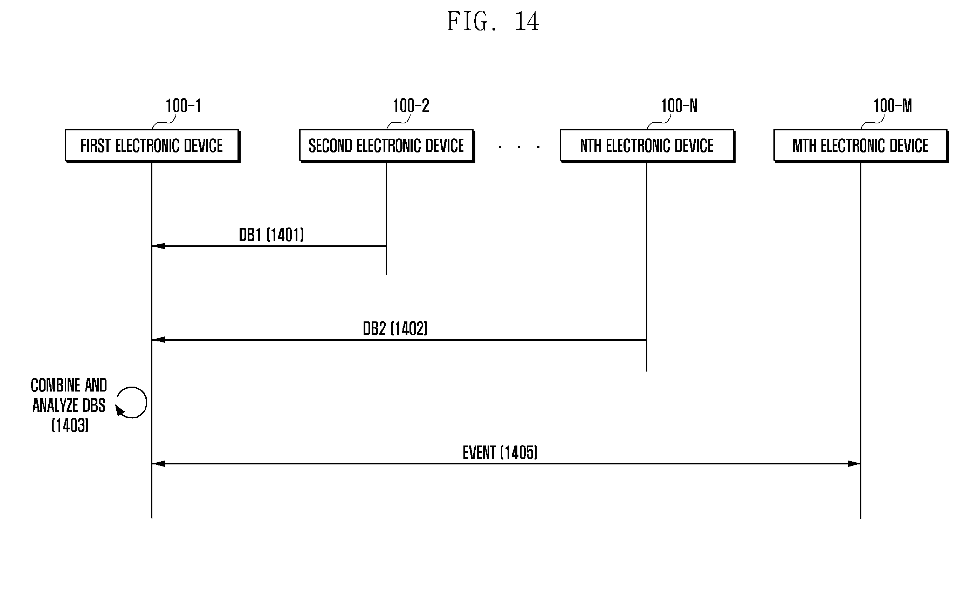

FIG. 14 illustrates a relation based data processing method according to still another embodiment of the various embodiments.

In the following description, the electronic devices 100-1, 100-2, ..., 100-N, and 100-M may be devices including a direct communication module which can directly perform Device to Device (D2D) communication without passing through a network or without an operation of a base station. The electronic devices 100-1, 100-2, ..., 100-N, and 100-M may be devices including at least one of the components described in FIGs. 1 and 2, FIGs. 3 to 5, or FIG. 11.

Referring to FIG. 14, in operations 1401 and 1402, for example, the first electronic device 100-1 may receive at least one of a first database DB1 and a second database DB2 from at least one of the second electronic device 100-2 and the Nth electronic device 100-N. According to an embodiment, the first electronic device 100-1 may enter the direct connection mode and make a request for the first database DB1 to the second electronic device 100-2. Further, the first electronic device 100-1 may also make a request for the second database DB2 to the Nth electronic device 100-N. Alternatively, according to an embodiment, when the first electronic device 100-1 cannot enter the direct connection mode, at least one of the second electronic device 100-2 and the Nth electronic device 100-N located close to the first electronic device 100-1 may automatically share at least one of the first database DB1 and the second database DB2 with the first electronic device 100-1. Collection of the databases by the first electronic device 100-1 may be performed without the entrance to the direct connection mode. For example, the first electronic device 100-1 may activate a communication channel related to a request for the database to the second electronic device 100-2 to the Nth electronic device 100-N according to a regular period or a user's request. The first electronic device 100-1 may receive databases from other electronic devices.

The first database DB1 and the second database DB2 may include particular information of other electronic devices collected by the second electronic device 100-2 and the Nth electronic device 100-N. According to an embodiment, the first database DB1 and the second database DB2 may include preference information of users of other electronic devices. Alternatively, the first database DB1 and the second database DB2 may include information indicating which electronic device has provided a response signal for which data fragment. Alternatively, the first database DB1 and the second database DB2 may include information indicating which electronic device has made a request for which data. The first database DB1 and the second database DB2 may include information on transmission information filters and reception information filters of other electronic devices. For example, the second electronic device 100-2 and the Nth electronic device 100-N may classify and store data broadcasted by other electronic devices and data provided by other electronic devices according to each electronic device.

When the first electronic device receives at least one of the first database DB1 and the second database DB2, for example, the first electronic device 100-1 may analyze the received databases in operation 1403. For example, the first electronic device 100-1 may compare at least one of type information of data possessed by the first electronic device 100-1 and name information of the data with a database analysis result. The first electronic device 100-1 may select another electronic device having a probability, which is high enough to receive event data to be transmitted, through a result of the comparison. The first electronic device 100-1 may transmit event data requested by the selected electronic device, for example, the M-th electronic device 100-M, to the M-th electronic device 100-M. When the event data has a size larger than or equal to a predetermined size, the first electronic device 100-1 may form a communication channel with the M-th electronic device 100-M and transmit the event data through the formed communication channel.

According to an embodiment, the first electronic device 100-1 may have a hamburger coupon. When it is determined that the M-th electronic device 100-M desires to receive the hamburger coupon through the database analysis, the first electronic device 100-1 may provide the possessed hamburger coupon to the M-th electronic device 100-M. Information on the M-th electronic device 100-M may be collected in the database analyzing operation.

In the relation based data processing method, the first electronic device 100-1 may apply at least one filter. According to an embodiment, the first electronic device 100-1 may select a filter having particular filter information according to a predetermined time or a predetermined place. The first electronic device 100-1 may process relation-based data based on the selected filter. The broadcasted filter information may consist of the above-described data fragments. An electronic device of a receiver side (for example, the M-th electronic device 100-M) may select a filter having particular filter information, which the electronic device desires to receive. The electronic device of the receiver side (for example, the M-th electronic device 100-M) may identify only broadcasting information filtered through the corresponding filter among broadcasting information provided at least one electronic device of a transmitter side (for example, the first electronic device 100-1 to the second electronic device 100-2).

According to an embodiment, the first electronic device 100-1 may process the relation-based data in connection with an application of an optimal condition. When there is a plurality of other electronic devices responding to the relation based data processing, the first electronic device 100-1 may select only a part of the other electronic devices by applying a predefined condition. Alternatively, the first electronic device 100-1 may arrange communication connection orders of other electronic devices based on a predefined condition. The first electronic device 100-1 may be connected to communicate with another electronic device according to an arrangement order. The first electronic device 100-1 may provide data or an event to another electronic device connected to communicate.

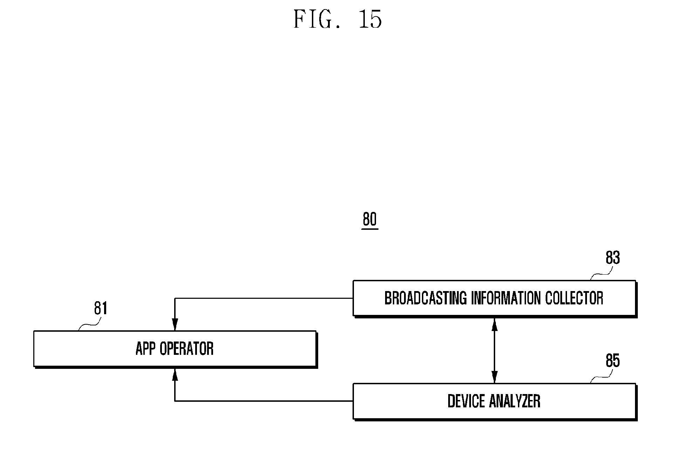

FIG. 15 illustrates a more detailed configuration of the optimal condition data processing module 80 according to various embodiments. The optimal condition data processing module 80 may be applied to at least one of the electronic devices described in the various embodiments. Hereinafter, the electronic device 100 will be described as an example.

Referring to FIG. 15, the optimal condition data processing module 80 may include an app operator 81, a broadcasting information collector 83, or a device analyzer 85. The app operator 81, the broadcasting information collector 83, or the device analyzer 85 may be implemented by a processor or may be implemented by a software module loaded to the processor.

For example, the app operator 81 may control an operation of an app of the electronic device 100. The app operator 81 may control an output of a standby screen or an icon-arranged screen related to selection of at least one app. Further, when an input related to an activation of a particular app is generated, the app operator 81 may active the corresponding app. When the app requested to be activated is a direct connection app related to the direct connection mode, the app operator 81 may activate the direct communication module 110. For example, the app operator 81 may control an operation of the direct connection app based on the direct communication module 110.

For example, the broadcasting information collector 83 may collect broadcasting information broadcasted by a neighboring electronic device when the direct connection app is operated. The broadcasting information collector 83 may provide broadcasting information to the device analyzer 85. The broadcasting information may include wireless environment information between the electronic device 100 and another electronic device, service information which another electronic device desires to perform, identification information of another electronic device or the like. The broadcasting information collector 83 may apply at least one of a plurality of relation schemes in the operation of collecting the broadcasting information of other electronic devices and collect the broadcasting information of other electronic devices based on the corresponding relation scheme. Further, the broadcasting information collector 83 may apply at least one filter and collect the broadcasting information of other electronic devices based on the applied filter.

For example, the device analyzer 85 may analyze a wireless environment with other electronic devices by using the broadcasting information of other electronic devices provided by the broadcasting information collector 83. For example, the device analyzer 85 may analyze information on a received signal strength, an error rate, or a distance by using the broadcasting information provided by other electronic devices. According to an embodiment, a distance analysis may be performed through the received signal strength. Alternatively, the distance analysis may be performed by collecting position information from other electronic devices. The device analyzer 85 may provide an analysis result to the app operator 81.

The app operator 81 may select another electronic device based on the analysis result provided by the device analyzer 85 in operating the direct connection app. For example, the app operator 81 may transmit predetermined data to another electronic device located beyond a predetermined distance among other electronic devices. Further, the app operator 81 may select another electronic device located within a predetermined distance, another electronic device having a motion made within a predetermined range or more, another electronic device having a received signal strength larger than or equal to or smaller than or equal to a predetermined value, or another electronic device having a bit error rate larger than or equal to or smaller than or equal to a predetermined value.

According to various embodiments, the electronic device (for example, the electronic device 100 or 100-1) may include a communication module for transmitting/receiving data based on wireless communication and a control module 160 for selecting at least one of a plurality of other electronic devices found in connection with a communication channel formation based on the communication module according to a predefined condition or determining communication connection orders of the plurality of other electronic devices.

According to various embodiments, the control module 160 may select at least one of other electronic devices based on at least one of intensities of signals received from the plurality of other electronic devices, a data error rate transmitted/received to/from the plurality of other electronic devices, distances from the plurality of other electronic devices, Quality of Service (QoS) with the plurality of other electronic devices, whether the plurality of other electronic devices are moved or not, whether the electronic device including the control module 160 is moved or not, and a previous communication connection history, and determine communication connection orders of the plurality of other electronic devices.

According to various embodiments, the control module 160 may differently configure a weight of at least one of the received signal strength, the data error rate, the distance, the QoS, the previous communication connection history, and whether the movement is made.

According to various embodiments, the electronic device (for example, the electronic device 100 or 100-1) may further include a position information collection module for collecting current position information and calculating distance from the plurality of other electronic devices by comparing the current position information with position information of the plurality of other electronic devices.

According to various embodiments, the control module 160 may make a communication connection with another electronic device located beyond a predetermined distance when a particular app is activated.

According to various embodiments, when a particular app is activated, if a movement of the control module 160 is detected, the control module 160 may make a communication connection with another electronic device located within a predetermined distance.

According to various embodiments, when a particular app is activated, the control module 160 may make a communication connection with another electronic device having no movement and having a received signal strength larger than or equal to a predetermined size among the plurality of other electronic devices.

According to various embodiments, when a particular app is activated, if the control module 160 searches the surroundings according to a regular period to detect a change in intensities of received signals of the plurality of other electronic devices, the control module 160 may disconnect the communication connection with the previous electronic device and make a communication connection with another electronic device having a received signal strength larger than or equal to a predetermined size.

According to various embodiments, the electronic device (for example, the electronic device 100 or 100-1) may further include at least one filter for selecting at least one of the data transmitted/received to/from another electronic device based on pre-input filter information.

According to various embodiments, the control module 160 may further include at least one of the filter based data processing module for selecting a particular filter according to at least one of a time, a place, and another electronic device to be connected to communicate, and for controlling to operate the selected filter and the relation based data processing module for dividing predetermined information into data fragments, sequentially broadcasting the data fragments to the selected electronic device, and controlling to provide a particular event or content to another electronic device which sequentially responds to the data fragments or responds to at least a part of the data fragments.

According to various embodiments, when commands stored in a machine-readable storage device are executed by at least one processor, the machine-readable storage device is configured to allow at least one processor to perform one or more operations. The one or more operations may include at least one of a first data processing operation of selecting at least one of other electronic devices based on a condition predefined for a plurality of other electronic devices found based on wireless communication or determining communication connection orders of the plurality of other electronic device and transmitting data to the selected electronic devices or other electronic devices according to the determined orders, a second data processing operation of selecting a particular filter according to at least one of the electronic devices to be connected to communicate and selecting at least one of the data transmitted/received to/from other electronic devices based on filter information written in the selected particular filter, and a third data processing operation of dividing predetermined information into data fragments, sequentially broadcasting the data fragments to the selected electronic devices, and controlling to provide a particular event or content to other electronic devices which sequentially respond to the data fragments or respond to at least a part of the data fragments.

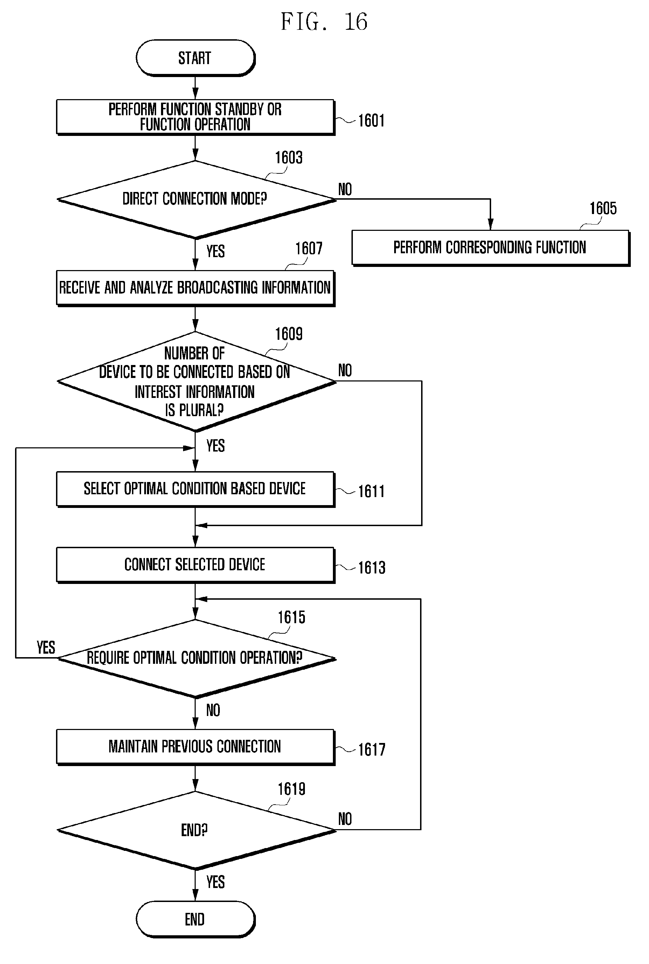

FIG. 16 is a flowchart illustrating an optimal condition data processing method according to various embodiments. The optimal condition data processing method described in FIG. 16 may be applied to at least one of the electronic devices described in the various embodiments.

Referring to FIG. 16, in the optimal condition data processing method according to various embodiments of the present disclosure, for example, the control module 160 of the electronic device 100 may perform a function standby in operation 1601. Alternatively, in operation 1601, for example, the control module 160 of the electronic device 100 may operate the function. According to various embodiments, the control module 160 may control to output a standby screen on the display module 140. The control module 160 may control an operation of a particular function set by schedule information or a particular function according to a user's request.

According to an embodiment, when there is a generation of a particular event, for example, the control module 160 may identify whether the event is an event related to an entrance to the direct connection mode in operation 1603. During such an operation, when the particular event is not the event related to the entrance to the direct connection mode, for example, the control module 160 may perform a function according to a type or a characteristic of the generated event in operation 1605. For example, the control module 160 may control an operation of a particular app according to a generated event.

When an event related to the entrance to the direct connection mode, for example, an event related to selection of a direct connection app is generated in operation 1603, for example, the control module 160 may control reception of broadcasting information and analyze the broadcasting information in operation 1607. According to an embodiment, the electronic device 100 may be in a state in which the electronic device 100 enters into a predetermined range in which other electronic devices are arranged. Other electronic devices may be in a state where particular broadcasting information is broadcasted in real time or according to a regular period. Then, the electronic device 100 may collect broadcasting information broadcasted by other electronic devices.

In operation 1607, the control module 160 may extract data written in the broadcasting information. The control module 160 of the electronic device 100 may identify which data is written in the broadcasting information. The control module 160 may identify whether the data has a correlation with interest information related to the operation of the direct connection app. The interest information may include an app type of the direct connection app, an app name, or particular data related to an app operation. For example, when a part of the extracted data corresponds to a particular word such as a "A game" and interest information also corresponds to the "A game", the control module 160 may determine another electronic device having provided data "game A" as another electronic device to be connected based on the interest information.

In operation 1609, for example, the control module 160 may identify whether a number of other electronic devices to be connected based on the interest information is plural. When a plurality of electronic devices is found, for example, the control module 160 may select a device based on an optimal condition in operation 1611. In the optimal condition based device selecting operation, the control module 160 may consider at least one predefined reference element. For example, the control module 160 may consider a Received Signal Strength (RSS), a distance (d) from another electronic device, a Bit Error Rate (BER), and a channel Quality of Service (QoS) as reference elements. For example, the RSS may be calculated from a size of a response signal of another electronic device for the signal broadcasted by the electronic device itself or a size of a signal broadcasted by another electronic device. The distance from another electronic device may be calculated based on a distance of the current electronic device 100 and position information of another electronic device. The BER may be an error rate of the data transmitted/received in a currently connected channel. The channel QoS may be a service quality of a currently connected channel.

According to an embodiment, the control module 160 may calculate a weight by applying at least one item of the reference elements to the following equation.

$$\text{weight} = RSS^*\alpha + d^*\beta + BER^*\gamma + QoS^*\delta \qquad (1)$$

In equation (1), $\alpha$, $\beta$, $\gamma$, and $\delta$ may be predetermined weights. Each of the weights may follow $0 \le \alpha < 1$, $0 \le \beta < 1$, $0 \le \gamma < 1$, $0 \le \delta < 1$. For example, the control module 160 may further consider additional elements as well the above elements, for example, a movement of the electronic device 100, a movement of another electronic device, a previous connection history, and whether the electronic device is a device registered in a phone book or schedule information. Further, in determining an optimal condition, the electronic device 100 may change a reference or a weight according to which application is currently driven by the user, which information is shared, which information and content is to be shared, what is a current channel state, or whether a counterpart or device is in a stop state or in a movement state. For example, the electronic device 100 may change the reference or weight for selecting the device of the optimal condition according to a situation and may be automatically connected to communicate with another electronic device of the optimal condition selected according to an application of the corresponding reference and weight.

According to an embodiment, the control module 160 may consider a weight according to a type of the direct connection app with respect to each of the elements. Further, the control module 160 may differently consider a weight according to a current time or place with respect to each of the elements. For example, the control module 160 may give a relatively low weight to a distance value from another electronic device in a downtown area. According to various embodiments, the control module 160 may give a higher weight to a distance value from another electronic device in a suburban area such as an open area or a plain in comparison with the downtown area. Further, the control module 160 may give a higher weight to an RSS in the suburban area such as the open area or the plain in comparison with the downtown area and give a lower weight to an RSS in the downtown area in comparison with the open area or the plain. The separation between the downtown area and the suburban area may be made by administrative district information defined in an electronic map. According to various embodiments, the differentiation between weights of the RSS may be applied by a degree of the spread of population residing within a predefined unit area.

According to various embodiments, a data transmission/reception method may include an operation of searching for another electronic device based on wireless communication, an operation of selecting at least one of a plurality of other electronic devices found based on a predefined condition or determining communication connection orders of the plurality of other electronic devices, and an operation of making a communication connection with another particular electronic device according to the determined order and transmitting/receiving data.

According to various embodiments, the processing operation may include an operation of collecting at least one piece of information of a received signal strength of the plurality of other electronic devices, a data error rate transmitted/received to/from the plurality of other electronic devices, distances from the plurality of other electronic devices, Quality of Service (QoS) with the plurality of other electronic devices, whether the plurality of other electronic devices are moved or not, whether the electronic device is moved or not, and a previous communication connection history and an operation of selecting another electronic device based on the collected information or determining communication connection orders of the plurality of other electronic devices.

According to various embodiments, the processing operation may further include an operation of differently configuring at least one weight of the received signal strength, the data error rate, the distance, and the QoS according to a type of a currently activated app.

According to various embodiments, the processing operation may include an operation of making a communication connection with another electronic device located most remotely from the electronic device when an app is activated or making a communication connection, starting from another electronic device located relatively remotely from the electronic device when an app is activated.

According to various embodiments, the processing operation may include an operation of making a communication connection with another electronic device located closest to the electronic device when a movement of the electronic device is detected, or making a communication connection, starting from another electronic device located relatively close to the electronic device when a movement of the electronic device is detected.

According to various embodiments, the processing operation may include an operation of making a communication connection with another electronic device having no movement and having the strongest received signal strength, or relatively strong received signal strength, among the plurality of other electronic devices when a particular app is activated or an operation of making a communication connection, starting from another electronic device having no movement and having a relatively strong received signal strength among the plurality of other electronic devices when a particular app is activated.

According to various embodiments, the processing operation may further include an operation of searching the surroundings again according to a regular period, disconnecting a communication connection with another previous electronic device when received signal strengths of the plurality of electronic devices are changed, and making a communication connection with another electronic device having the strongest or relatively strong received signal strength.

According to various embodiments, the processing operation may further include at least one of a filter based data processing operation of selecting a particular filter according to at least one of a time, a place, and another electronic device to be connected to communicate and selecting at least one of the data transmitted/received to/from another electronic device based on filter information written in the selected particular filter and a relation based data processing operation of dividing predetermined information into data fragments, sequentially broadcasting the data fragments to the selected electronic device, and controlling to provide a particular event or content to anther electronic device which sequentially responds to the data fragments or responds to at least a part of the data fragments.

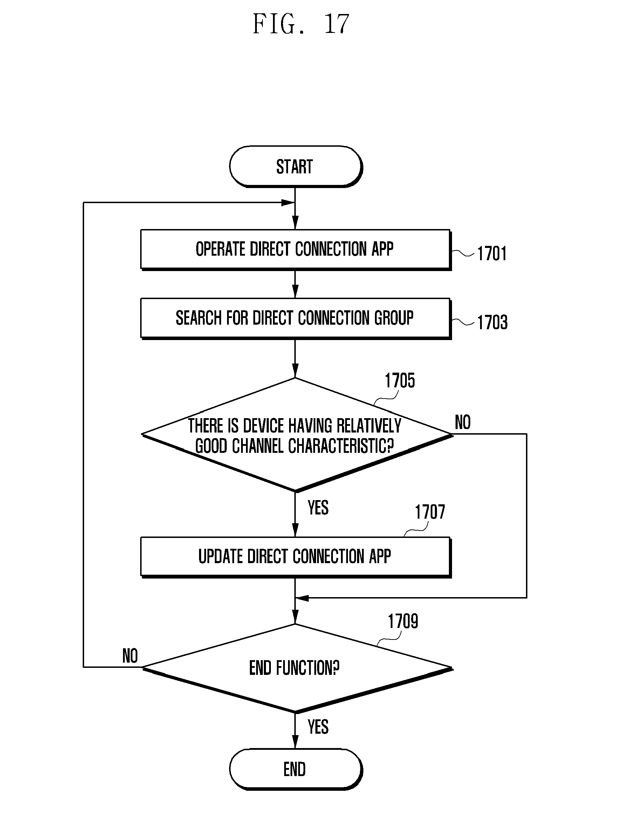

FIG. 17 is a flowchart illustrating a channel characteristic based optimal condition data processing method according to various embodiments. The optimal condition data processing method described in FIG. 17 may be applied to at least one of the electronic devices described in the various embodiments.

Referring to FIG. 17, in operation 1701, for example, when a request related to an operation of a direct connection app is generated, the control module 160 of the electronic device may operate the direct connection app. For example, in operation 1703, the control module 160 may search for a direct connection group. The electronic device 100 may be arranged within a predetermined range in which at least one of other electronic devices is arranged. In operation 1703, for example, the control module 160 may receive broadcasting information broadcasted by other electronic devices. The control module 160 may analyze the received broadcasting information. In operation 1705, for example, the control module 160 may identify whether there is a device having a good channel characteristic by performing a comparison with a device having formed a current channel. When there is a device having a good channel characteristic, for example, the control module 160 may update the direct connection app in operation 1707. According to an embodiment, the control module 160 may be connected to communicate with another electronic device having the good channel characteristic in connection with the operation of the direct connection app.

In operation 1709, for example, the control module 160 may identify whether an event related to an end of the function is generated. When there is no generation of an event related to the end of the function, the control module 160 may proceed to an operation before operation 1701 to re-perform the following operations. In any example, when there is no device having a better channel characteristic than the previous device in operation 1705, the control module 160 may maintain the previous communication connection.

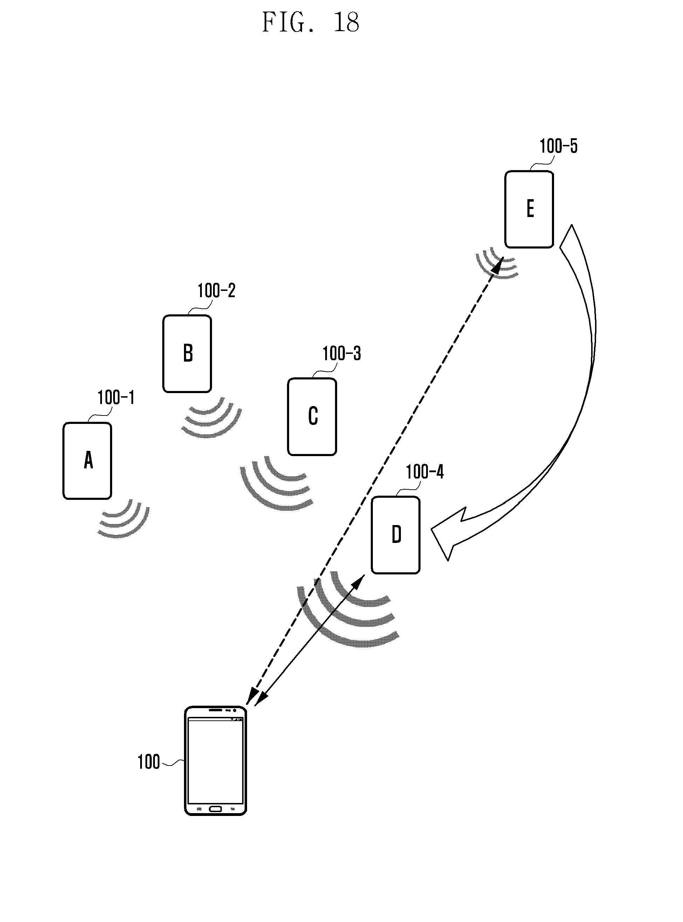

FIG. 18 illustrates optimal condition data processing according to a channel characteristic, for example, a BER characteristic according to various embodiments.

In the following description, electronic devices 100-1, 100-2, 100-3, 100-4, and 100-5 may be devices including a direct communication module which can directly perform Device to Device (D2D) communication without passing through a network or without an operation of a base station. The electronic devices 100-1, 100-2, 100-3, 100-4, and 100-5 may be devices including at least one of the components described in FIGs. 1 and 2, FIGs. 3 to 5, or FIG. 11.

Referring to FIG. 18, in a state where the first to fifth electronic devices 100-1, 100-2, 100-3, 100-4, and 100-5 are arranged within a predetermined rage, the electronic device 100 may enter the predetermined range. The electronic device 100 may operate the direct connection app according to a user's request or preset schedule information. When the direct connection app is operated, the electronic device 100 may operate the app based on a communication connection with, for example, the fifth electronic device 100-5. According to an embodiment, direct connection apps executed in the first electronic device 100-1, the fourth electronic device 100-4, and the fifth electronic device 100-5 may be game apps executed based on the direct connection. Direct connection apps executed in the second electronic device 100-2 and the third electronic device 100-3 may be file search and sharing apps.

In any example, in the direct connection app executing operation, the electronic device 100 may receive broadcasting information from other electronic devices and inspect a particular channel characteristic, for example, the BER characteristic based on the received broadcasting information. For example, the electronic device 100 may omit inspections of BER characteristics of the second electronic device 100-2 and the third electronic device 100-3 executing a different direct connection app.

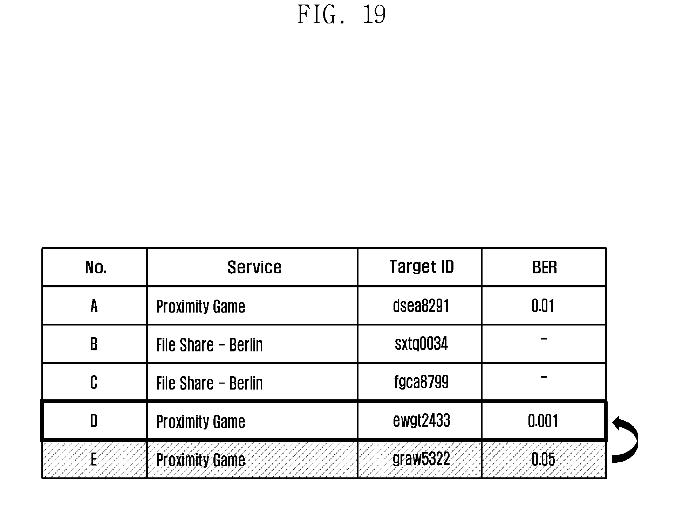

FIG. 19 illustrates a BER characteristic formed between the electronic device according to various embodiments and another electronic device.

Referring to FIG. 19, the electronic device 100 of FIG. 18 may disconnect the direct communication connection with the fifth electronic device 100-5 based on a result of the inspection of the BER characteristic. The electronic device 100 may make the direct communication connection with the fourth electronic device 100-4. The electronic device 100 may operate a game app corresponding to the direct connection app with the fourth electronic device 100-4.

The electronic device 100 may provide a predetermined time point when another electronic device can be inspected. For example, when a predetermined phase ends and a new phase is generated in executing a game, the connection may be switched based on the BER characteristic. Alternatively, when the user ends the currently executed game phase but continuously makes a request for executing the game, the control module 160 of the electronic device 100 may search for, and be connected to, another electronic device based on the BER characteristic.

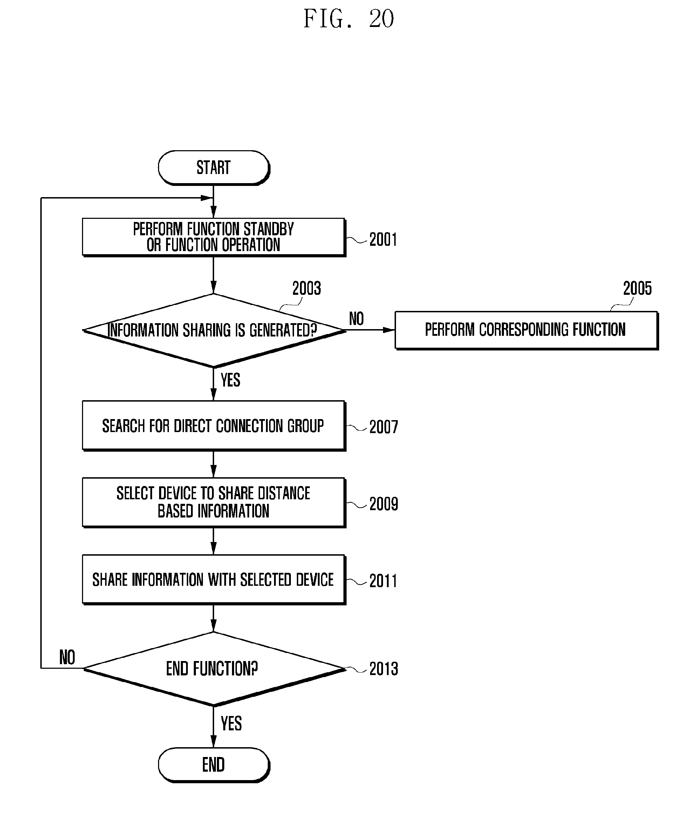

FIG. 20 is a flowchart illustrating a distance based optimal condition data processing method according to various embodiments. The distance based optimal condition data processing method described in FIG. 20 may be applied to at least one of the electronic devices described in the various embodiments.

Referring to FIG. 20, in operation 2001, for example, the control module 160 of the electronic device 100 may perform a particular function or perform a function standby. For example, the control module 160 may support a music reproduction or broadcast viewing function according to a user's request.

In operation 2003, for example, the control module 160 may identify whether direct connection based information sharing is generated. When there is no generation of corresponding information sharing, for example, the control module 160 may perform a previous function or a function according to a user's input in operation 2005. According to an embodiment, the generation of the information sharing may be made when the user selects a menu configured to share a particular message with another electronic device. Alternatively, the generation of the information sharing may be made when the user selects a menu configured to share a message received from another electronic device with still another electronic device. Alternatively, the generation of the information sharing may be made when the user selects a menu configured to share an alarm generated according to predefined schedule information or the schedule information with another electronic device. In a case of the particular message, a request for sharing information may be automatically made without selecting the menu by the user. For example, when an emergency button configured to inform of generation of an emergency is selected and thus a message is generated, an information sharing function may be automatically executed.

When a direct connection based information sharing demand is generated in operation 2003, for example, the control module 160 may search for a direct connection group in operation 2007. The electronic device 100 may be located within a predetermined range in which at least one other electronic device is arranged. Then, the electronic device 100 may collect broadcasting information broadcasted by other electronic devices and analyze the corresponding information. The control module 160 of the electronic device 100 may calculate distances from other electronic devices based on the received broadcasting information. According to an embodiment, the broadcasting information provided by other electronic devices may include position information of the electronic devices themselves. According to an embodiment, the control module 160 of the electronic device 100 may make a request for providing position information of the devices to other electronic devices, respectively. For example, the control module 160 may broadcast data asking about position information to other electronic devices.

When the distances from other electronic devices are calculated, for example, the control module 160 may select a device to share information based on the calculated distances in operation 2009. According to various embodiments, the control module 160 may select another electronic device located most remotely from the electronic device 100 in operation 2009. Alternatively, the control module 160 may select another electronic device located closest to the electronic device 100 in operation 2009. Alternatively, the control module 160 may select another electronic device separated from the electronic device 100 by a predefined distance or more or by the predefined distance or less or another electronic device maintaining the predetermined distance in operation 2009.

When another electronic device is selected, for example, the control module 160 may share information with the selected device in operation 2011. According to various embodiments, the control module 160 may transmit the information generated in operation 2003 to the selected electronic device. In operation 2013, for example, the control module 160 may identify whether an event related to an end of the function is generated. When there is no generation of the event related to the end of the function, the control module 160 may proceed to an operation before operation 2001 to re-perform the following operations.

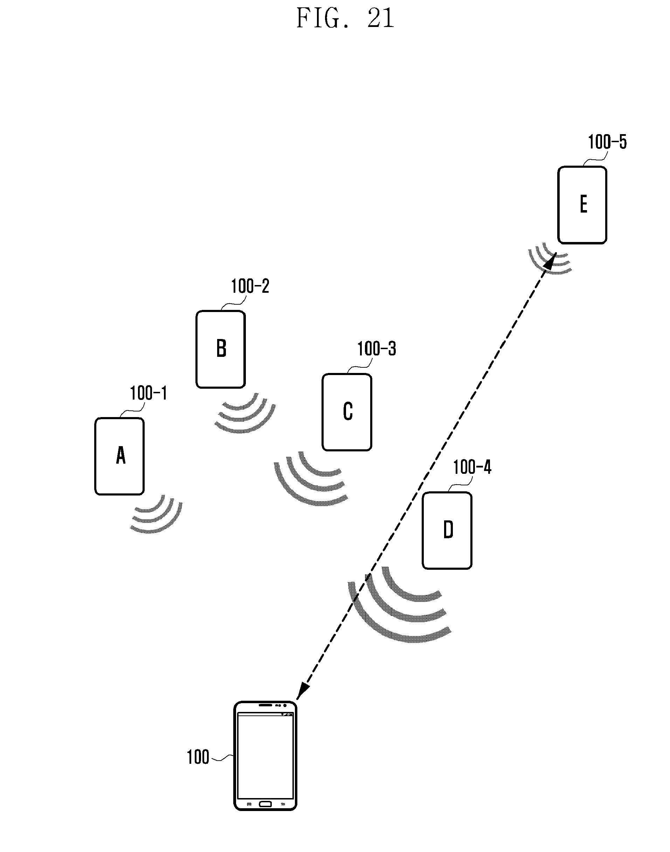

FIG. 21 illustrates a distance based optimal condition data processing situation according to various embodiments.

In the following description, electronic devices 100-1, 100-2, 100-3, 100-4, and 100-5 may be devices including a direct communication module which can directly perform Device to Device (D2D) communication without passing through a network or without an operation of a base station. The electronic devices 100-1, 100-2, 100-3, 100-4, and 100-5 may be devices including at least one of the components described in FIGs. 1 and 2, FIGs. 3 to 5, or FIG. 11.

Referring to FIG. 21, in a state where the first to fifth electronic devices 100-1, 100-2, 100-3, 100-4, and 100-5 are arranged, information to be shared with at least one other electronic device may be generated in the electronic device 100. For example, an emergency such as a traffic accident or fire may be generated in a predetermined position related to the electronic device 100. According to various embodiments, the electronic device 100 may make a request for executing an information sharing function by using a written message. During such an operation, the electronic device 100 may store predefined messages to be used for the information sharing function for the emergency generation. The electronic device 100 may output a predefined message on the display module 140 according to a user's request. The user may select a message suitable for a current state from the output messages, write a new message, or modify the selected message.

According to an embodiment, when a request for executing the information sharing function is generated, the electronic device 100 may activate the direct communication module 110. Other electronic devices may provide broadcasting information including position information to the electronic device 100 by default. Alternatively, other electronic devices may receive a request for providing the broadcasting information including the position information from the electronic device 100. In the broadcasting information transmitting operation, other electronic devices having received the request may transmit broadcasting information including their own position information to the electronic device 100. When the electronic device 100 receives the broadcasting information including the position information, the electronic device 100 may calculate distances from other electronic devices.

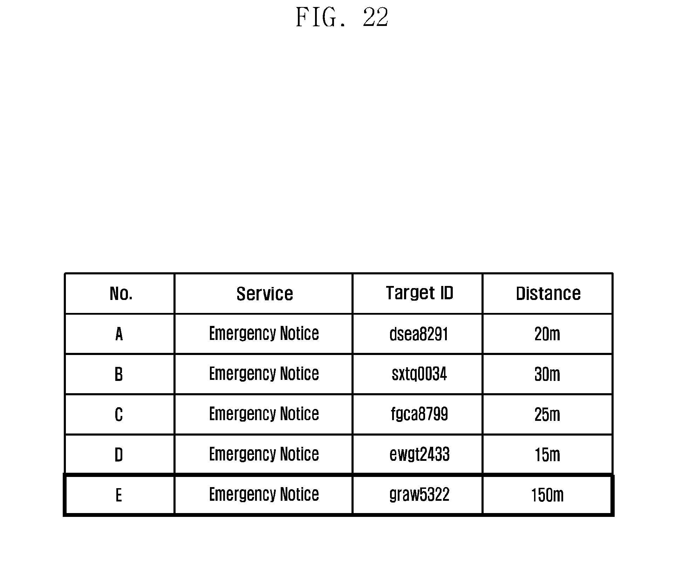

FIG. 22 illustrates a result of the calculation of the distances according to various embodiments. In the following description of FIG. 22, electronic devices will be described based on the electronic device of FIG. 21 as an example.

Referring to FIG. 22, it may be noted that the fifth electronic device 100-5 is located most remotely from the electronic device 100. The electronic device 100 in FIG. 21 may select the fifth electronic device 100-5 and may be connected to communicate with the fifth electronic device 100-5 based on the direct communication module 110. The electronic device 100 may transmit a message generated in connection with information sharing to the fifth electronic device 100-5. According to an embodiment, the electronic device 100 may make a communication connection with an electronic device 100 located closest to the electronic device, for example, the fourth electronic device 100-4 of FIG. 21 and transmit a message. According to an embodiment, the selection of the electronic device may be performed for a particular electronic device 100 located within a predetermined distance as described above. For example, when the electronic device 100 is configured to share information with an electronic device 100 within 30 m if an emergency is generated, the electronic device 100 may make a communication connection with the second electronic device 100-2 of FIG. 21 and transmit a message to the second electronic device 100-2.

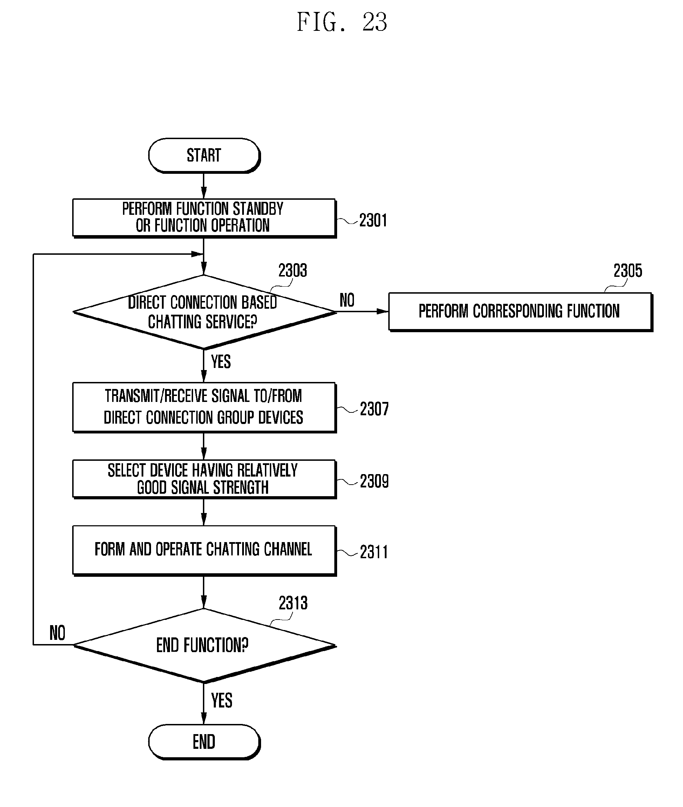

FIG. 23 is a flowchart illustrating a received strength based optimal condition data processing method according to various embodiments. The received strength based optimal condition data processing method described in FIG. 23 may be applied to at least one of the electronic devices described in the various embodiments.

Referring to FIG. 23, in operation 2301, for example, the control module 160 of the electronic device 100 may perform a particular function, or perform a function standby. When a particular event is generated, for example, the control module 160 may identify whether the generated event is an event related to a direct connection based chatting service (proximity chatting) in operation 2303. According to various embodiments, the electronic device 100 may provide an app, which can select the direct connection based chatting service. During such an operation, the electronic device 100 may output an icon or a menu item related to the selection of the corresponding app on the display module 140. When the event generated in operation 2303 is not the event related to the chatting service, for example, the control module 160 may perform a function according to a type or a characteristic of the generated event in operation 2305. According to an embodiment, the control module 160 may support a web access function or a picture browsing function according to the characteristic of the generated event.

When the event related to an activation of the direct connection based chatting service is generated in operation 2303, for example, the control module 160 may transmit/receive signals to/from direct connection group devices in operation 2307. According to various embodiments, the control module 160 may collect received signal strength information based on the transmission/reception of the signals of other electronic devices. According to an embodiment, the control module 160 may activate the direct communication module 110 and receive broadcasting information provided by other neighboring electronic devices as a signal related to detection of the received signal strength.

In operation 2309, for example, the control module 160 may select another electronic device which has a good signal strength. In operation 2311, for example, the control module 160 may form a chatting channel by making a communication connection with the selected device and control a chatting service according to a user's request. When a particular event is generated, for example, the control module 160 may identify whether the particular event is an input event related to an end of the function. When the particular function is not the event related to the end of the function, the control module 160 may proceed to an operation before operation 2303 to re-perform the following operations.

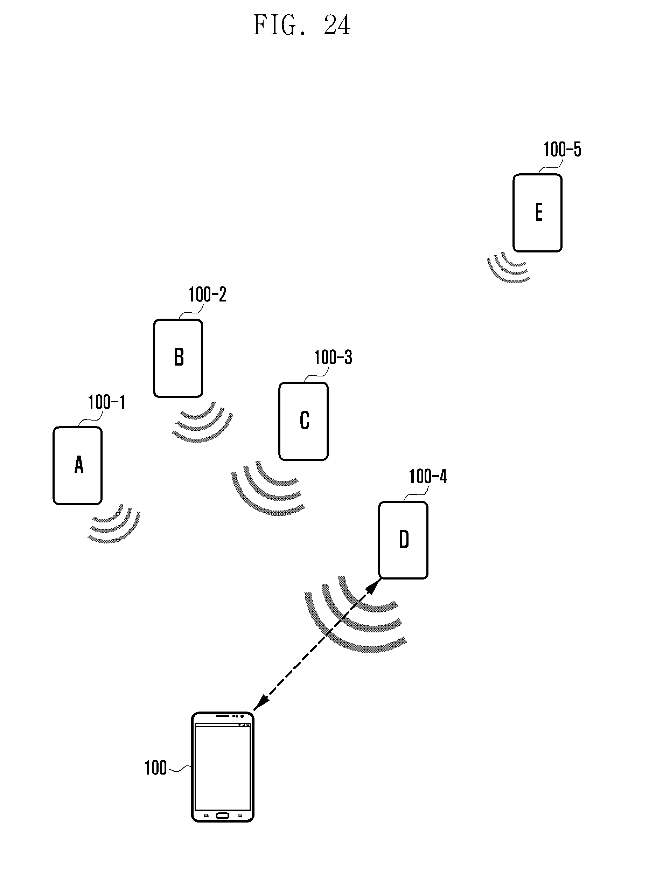

FIG. 24 illustrates a signal strength based optimal condition data processing situation according to various embodiments.

In the following description, electronic devices 100-1, 100-2, 100-3, 100-4, and 100-5 may be devices including a direct communication module which can directly perform Device to Device (D2D) communication without passing through a network or without an operation of a base station. The electronic devices 100-1, 100-2, 100-3, 100-4, and 100-5 may be devices including at least one of the components described in FIGs. 1 and 2, FIGs. 3 to 5, or FIG. 11 or FIG. 15.

Referring to FIG. 24, the first to fifth electronic devices 100-1, 100-2, 100-3, 100-4, and 100-5 may be arranged within a predetermined range. For example, the first to fifth electronic devices 100-1, 100-2, 100-3, 100-4, and 100-5 may be devices located within a range in which communication is possible based on the direct communication module 110. The electronic device 100 may be located in a position in which communication with the first to fifth electronic devices 100-1, 100-2, 100-3, 100-4, and 100-5 is possible.

According to an embodiment, the electronic device 100 may receive a request for activating a direct connection based chatting service from the user. The direct connection based chatting service may be a service that can transmit/receive a chatting message based on the direct communication module 110. The electronic device 100 may broadcast information informing that the direct connection based chatting service is being currently executed to another electronic device. For example, the first to fifth electronic devices 100-1, 100-2, 100-3, 100-4, and 100-5 may be in a state where interest information defined by users thereof are broadcasted. According to an embodiment, the interest information may be various types of information such as game app participation application information, game app participation request information, particular music content search information, particular music possession information, traffic identification information, and device matching identification information.

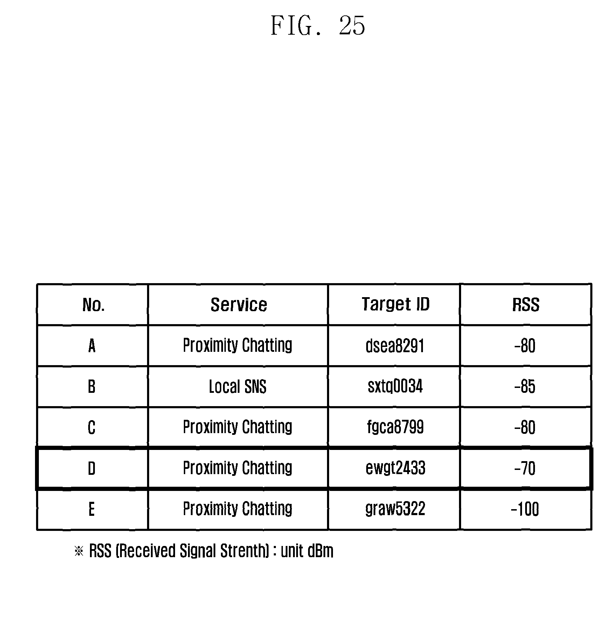

FIG. 25 illustrates a result of received signal strengths between the electronic device and other electronic devices. Electronic devices illustrated in FIG. 25 will be described based on the electronic devices illustrated in FIG. 24 as an example.

Based on an example illustrated in FIG. 25, the first electronic device 100-1, the third electronic device 100-3, the fourth electronic device 100-4, and the fifth electronic device 100-5 of FIG. 24 may be operating the direct connection based chatting service and may broadcast related broadcasting information. According to an embodiment, the second electronic device 100-2 of FIG. 24 may broadcast broadcasting information related to an operation of a local Social Network Service (SNS). The local SNS may be a service based on communication using a base station or a server. When the electronic device 100 makes a request for participating in the direct connection based chatting service, the first electronic device 100-1, the third electronic device 100-3, the fourth electronic device 100-4, and the fifth electronic device 100-5 may transmit response signals corresponding to the request to the electronic device 100.

For example, the electronic device 100 may receive broadcasting information from the first to fifth electronic devices 100-1, 100-2, 100-3, 100-4, and 100-5 as response signals. The electronic device 100 may collect received signal strength information based on response signals of the first to fifth electronic devices 100-1, 100-2, 100-3, 100-4, and 100-5. The electronic device 100 may select the fourth electronic device 100-4 having a received signal strength higher than or equal to a predetermined value, for example, the best received signal strength. The electronic device 100 may support the direct connection based chatting service with the fourth electronic device 100-4. According to an embodiment, when the second electronic device 100-2 has different interest information even though the received signal strength of the second electronic device 100-2 is the best, the electronic device 100 may not attempt to make the communication connection with the corresponding device. According to various embodiments, the electronic device 100 may perform the direct connection based chatting service with other electronic devices according to an order of the received signal strength. Alternatively, the electronic device 100 may control to maintain only the communication connection with the fourth electronic device 100-4.

As described above, when a particular direct connection app is operated, the communication connection of the electronic device 100 with another electronic device based on the received signal strength may be used when a proximity range chatting of the electronic device, enabling direct wireless communication without passing through a base station, a server, or a network, when a proximity range SNS is executed, when a proximity range game is executed, when a battery level is equal to or lower than a predetermined value, or when a community density of devices has a value larger than or equal to or smaller than or equal to a predetermined value.

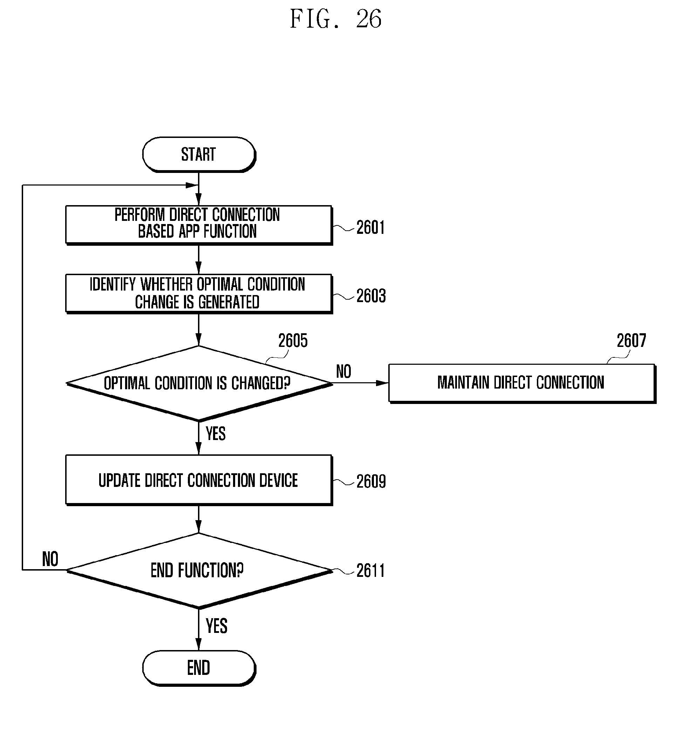

FIG. 26 is a flowchart illustrating a processing method according to an optimal condition change according to various embodiments. The processing method according to the optimal condition change described in FIG. 26 may be applied to at least one of the electronic devices described in the various embodiments.

Referring to FIG. 26, in the processing method according to the optimal condition change according to an embodiment, for example, the control module 160 of the electronic device 100 may control an operation of a direct connection based app according to a request for operating the direct connection based app in operation 2601. In connection with the operation of the direct connection based app, the control module 160 may be connected to communicate with at least one other electronic device based on the direct communication module 110. The control module 160 may control the operation of the direct connection app based on the communication connection.

In operation 2603, for example, the control module 160 may perform an operation related to the identification of the optimal condition change. According to an embodiment, the control module 160 may monitor broadcasting information provided by other electronic devices. Alternatively, the control module 160 may identify a movement of the electronic device 100. In operation 2605, for example, the control module 160 may identify whether the optimal condition change is generated. When the optimal condition change is not generated in operation 2605, for example, the control module 160 may maintain the direct connection in operation 2607.

When the optimal condition change is generated in operation 2605, for example, the control module 160 may update the device to have the direct communication connection in operation 2606. The control module 160 may receive signals transmitted by other electronic devices. The control module 160 may identify position movements of other electronic devices based on the received signals. For example, when received signal strengths of other electronic devices are changed, the electronic device 100 may determine that the electronic device 100 or other electronic devices have moved. Alternatively, other electronic devices include sensors, respectively, and may insert sensor information related to the movement into broadcasting information and transmit the broadcasting information. According to an embodiment, the electronic device 100 may variously apply an optimal condition according to movements of other electronic devices. The control module 160 may disconnect a connection with another electronic device and form a communication connection with still another electronic device.

When there is a generation of an input event related to an end of the function in operation 2611, for example, the control module 160 may end the function. When there is no generation of an event related to an end of the function, the control module 160 may proceed to an operation before operation 2601 to re-perform the following operations.

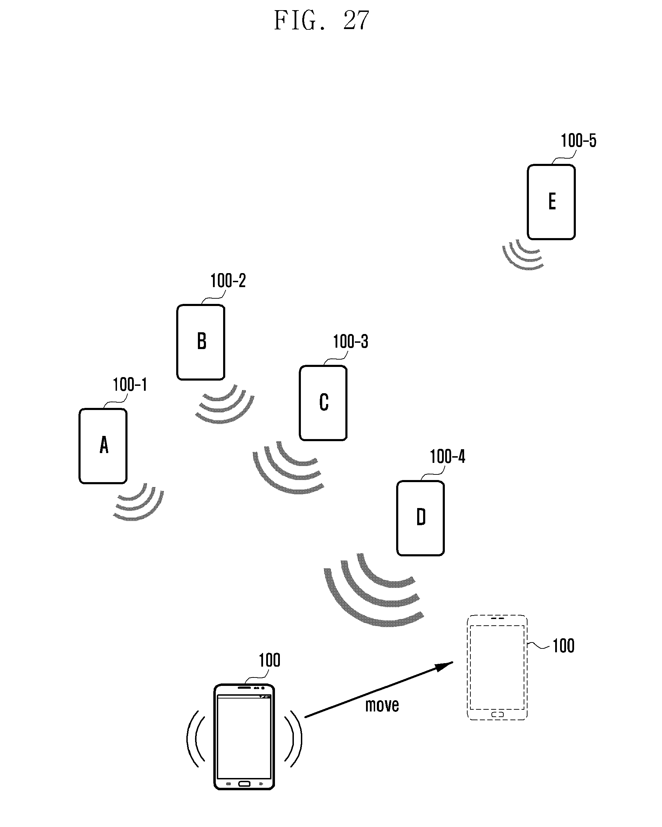

FIG. 27 illustrates a data processing operation according to an optimal condition change according to various embodiments.

In the following description, electronic devices 100-1, 100-2, 100-3, 100-4, and 100-5 may be devices including a direct communication module which can directly perform Device to Device (D2D) communication without passing through a network or without an operation of a base station. The electronic devices 100-1, 100-2, 100-3, 100-4, and 100-5 may be devices including at least one of the components described in FIGs. 1 and 2, FIGs. 3 to 5, or FIG. 11 or FIG. 15.

Referring to FIG. 27, the first to fifth electronic devices 100-1, 100-2, 100-3, 100-4, and 100-5 are arranged within a predetermined range and the electronic device 100 may select one of the electronic devices in connection with an operation of the direct connection app. For example, in an operation of sharing information in response to an emergency generation, the electronic device 100 may make a communication connection with the fifth electronic device 100-5 located most remotely from the electronic device 100 and transmit a message. According to an embodiment, the electronic device 100 may identify whether there is a movement of the device by using a sensor. When the electronic device 100 is moving while performing an information sharing function in response to the emergency generation, the electronic device 100 may recognize it as a generation of the optimal condition change. When the generation of the optimal condition change is determined, the electronic device 100 may select one of the first to fourth electronic devices 100-1, 100-2, 100-3, and 100-1 to be connected to communicate without selecting the fifth electronic device 100-5. Since a wireless environment is changed due to the movement, the electronic device 100 may reduce a probability of failure of message transmission to the fifth electronic device 100-5.

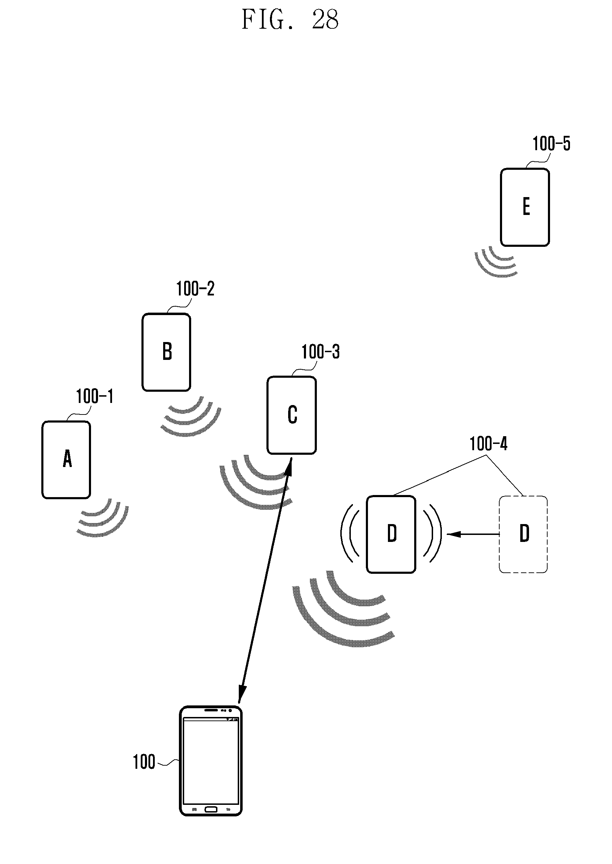

FIG. 28 illustrates another data processing operation according to an optimal condition change according to various embodiments.

In the following description, electronic devices 100-1, 100-2, 100-3, 100-4, and 100-5 may be devices including a direct communication module which can directly perform Device to Device (D2D) communication without passing through a network or without an operation of a base station. The electronic devices 100-1, 100-2, 100-3, 100-4, and 100-5 may be devices including at least one of the components described in FIGs. 1 and 2, FIGs. 3 to 5, or FIG. 11 or FIG. 15.

Referring to FIG. 28, the first to fifth electronic devices 100-1, 100-2, 100-3, 100-4, and 100-5 are arranged within a predetermined range and the electronic device 100 may select one of the electronic devices in connection with an operation of the direct connection app. For example, the electronic device 100 may make a direct communication connection according to a received signal strength. According to the technology described in FIG. 23 above, the electronic device 100 may make the communication connection with the fourth electronic device 100-4 having the best received signal strength and transmit a message.

In any example, the electronic device 100 may monitor other electronic devices or receive movement information from other electronic devices. Based on the monitoring and the movement information, the electronic device 100 may analyze movement information of other electronic device. For example, the electronic device 100 may analyze that the fourth electronic device 100-4 moves in a predetermined direction. For example, the electronic device 100 may analyze that the third electronic device 100-3 has no movement. In this case, for example, the electronic device 100 may make a communication connection with the third electronic device 100-3. According to an embodiment, the third electronic device 100-3 may be a device which has no movement and has good received signal strength information just after the fourth electronic device 100-4. For example, even though the fifth electronic device 100-5 is also analyzed as the device having no movement, the electronic device 100 may select the third electronic device 100-3 having a better received signal strength and make the direct communication connection.

The optimal condition data processing method according to the present disclosure may support more efficient data transmission/reception processing by selecting a device which meets a predetermined condition or an optimal condition in selectively selecting a device. The electronic device (for example, at least one of the electronic devices 100, 100-1 and the like) according to the present disclosure may improve the use of resources in communication between devices by being connected to another electronic device having an optimal condition according to a situation. In a direct wireless communication technology, the electronic device may frequently and continuously communicate with at least one device. According to various embodiments of the present disclosure, the electronic device (for example, at least one of the electronic devices 100, 100-1 and the like) according to the present disclosure may achieve optimization of resources and improve power consumption according to the optimization. For example, the electronic device (for example, at least one of the electronic devices 100, 100-1 and the like) according to the present disclosure may reduce a size of transmission output to decrease power consumption by being connected to a device having an optimal condition in a close range or a device in a good wireless environment.

According to various embodiments, the above-described device may further include various additional modules according to a provided type thereof. For example, when the device includes a communication function, the device may further include components which have not been described above, such as a short-range communication module supporting short-range communication, an interface supporting data transmission/reception by a wired communication scheme or a wireless communication scheme of the device, an Internet communication module communicating with an Internet network to perform an Internet function, a digital broadcasting module performing a function of receiving and reproducing a digital broadcast and the like. Although all such components may not be listed, since modifications thereof are diversely made according to a convergence trend of digital devices, components equivalent to the aforementioned components may be further included in the devices. Also, it goes without saying that, in the electronic device, a particular component may be excluded from the above-described components or may be replaced by another component according to a provided form thereof. This may be easily understood by those skilled in the art to which the present disclosure pertains.

The module according to various embodiments may be hardware, firmware, software, or a combination of two or more thereof.

At least a part of the operations (for example, operations 1601 to 1613) described in each of the methods according to the various embodiments may be performed sequentially, in parallel, in a different order, or repeatedly, may be omitted, or a new operation may be added.

The term "or" used in the present disclosure includes any or all of combinations of listed words. For example, the expression "A or B" may include only A or only B, or may include both A and B.

Further, the device according to various embodiments of the present disclosure may include all mobile communication terminals operating based on communication protocols corresponding to various communication systems, all information and telecommunication devices and multimedia devices such as a Portable Multimedia Player (PMP), a digital broadcast player, a Personal Digital Assistant (PDA), a music player (for example, MP3 player), a portable game electronic device, a smart phone, a notebook, and a handheld PC, and application devices thereof.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device comprising:

   a transmission/reception module configured to transmit or receive data by using a communication channel formed based on wireless communication; and
   at least one filter having filter information related to a selection of at least one of data transmitted through the communication channel formed by the transmission module and data received through the communication channel formed by the reception module.

2. The electronic device of claim 1, wherein the filter is applied to at least one of a reception information filter module configured to select data to be received through the reception module and a transmission information filter module configured to select data that can be transmitted through the transmission module.

3. The electronic device of claim 2, further comprising
   a filter selector configured to select filter information to select data of at lea st one of the transmission information filter module and the reception information fil ter module according to at least one of a time, a place, and information on another electronic device; and
   a control module configured to control at least one of the transmission module, the reception module, and the filter selector.

4. The electronic device of claim 3, wherein the control module is configured to change an operation state of the control module when data filtered through a filter arranged in the transmission information filter module is received through the reception module, and change a previous operation state of the control module when data filtered through a filter arranged in the reception information filter module is received through the reception module, or a content corresponding to the received data is transmitted through the transmission module.

5. The electronic device of claim 2, further comprising a display module configured to display at least one data received by the reception information filter module or display a priority according to ordering after receiving broadcasted data or a current surrounding issue.

6. The electronic device of claim 1, further comprising:

a sensor module including at least one sensor configured to generate a particular sensor signal corresponding to situation information of the electronic device; and
a situation processing module configured to identify the situation information based on the signal generated by the sensor module and control to apply at least one filter to the transmission module or the reception module according to the situation information.

7. The electronic device of claim 1, wherein the filter has at least one grade corresponding to an acceptance degree of an approach by another electronic device.

8. The electronic device of claim 1, further comprising a control module configured to control the electronic device, wherein the control module comprises at least one of:

a first data processing module configured to control an application of the filter;
a second data processing module configured to, when at least one of other electronic devices is found, select at least one electronic device according to a predetermined condition, or determine communication connection orders of the other electronic devices; and
a third data processing module configured to broadcast at least one piece of filter information and control to provide an event or a content to another electronic device that responds to at least a part of the filter information.

9. A method of transmitting or receiving data by using wireless communication, the method comprising:

selecting a transmission filter for filtering data to be transmitted based on wireless communication or selecting a reception filter for filtering data to be received based on the wireless communication; and
transmitting data filtered through the transmission filter or receiving data filtered through the reception filter.

10. The method of claim 9, wherein the selecting of the transmission filter comprises selecting filter information to select data of at least one of the transmissi on filter and the reception filter according to at least one of a time, a place, and inf ormation on another electronic device connected through direct wireless communi cation.

11. The method of claim 9, further comprising, changing an operation state of a control module when data filtered by the transmission filter is received; and
maintaining a previous operation state of a control module when data filtered by the reception filter is received or a content corresponding to the received data is transmitted.

12. The method of claim 9, further comprising:

collecting a particular sensor signal generated according to a situation of the electronic device;
collecting situation information based on the collected sensor signal; and
selecting a particular filter according to the collected situation information.

13. The method of claim 9, further comprising at least one of:

configuring the filter information as a grade in which the filter information cannot be searched for by another electronic device;
configuring the filter information as a grade in which a predetermined security is processed to receive the filter information; and
configuring the filter information as a grade in which the filter information is automatically transmitted.

14. The method of claim 10, further comprising:

dividing the filter information into data fragments; and
sequentially broadcasting the data fragments to another electronic device and providing a particular event or content to another electronic device that responds to the data fragments or responds to a part of the broadcasted data fragments.

15. A non-transitory machine-readable storage medium storing commands, the commands configured when executed to cause one or more processors to perform one or more operations, the one or more operations comprising at least one of:

a first data processing operation of selecting at least one of data transmitted and received based on wireless communication based on a filter having particular information;

a second data processing operation of selecting only a part of another elec tronic device from a plurality of other electronic devices found based on the wireles s communication according to a predefined condition or determining communicatio n connection orders of the other electronic devices, so as to control data transmiss ion; and

a third data processing operation of sequentially broadcasting data fragments to another electronic device based on the wireless communication and controlling to provide a particular event or content to another electronic device that sequentially responds to the data fragments or responds to at least a part of the data fragments.

# FIG. 1

100

DIRECT COMMUNICATION MODULE — 110

CONTROL MODULE — 160

STORAGE MODULE — 150

# FIG. 2

160

| FILTER BASED DATA PROCESSOR | ~ 60 |

| RELATION BASED DATA PROCESSOR | ~ 70 |

| OPTIMAL CONDITION DATA PROCESSOR | ~ 80 |

FIG. 3

FIG. 4

110

DIRECT COMMUNICATION MODULE

170

171

SHARED
MEMORY

172

CONTEXT-AWARE
MODULE

160

CONTROLLER

FIG. 5

110

111

TRANSMISSION MODULE

112

RECEPTION MODULE

118

113

TRANSMISSION INFORMATION
FILTER MODULE

114

RECEPTION INFORMATION
FILTER MODULE

117

FILTER SELECTOR

116

INTERFACE

# FIG. 6

START

PERFORM FUNCTION OPERATION OR FUNCTION STANDBY — 601

603

DIRECT CONNECTION MODE? — NO → PERFORM CORRESPONDING FUNCTION — 605

YES

COLLECT AND IDENTIFY SITUATION INFORMATION — 607

SELECT FILTER — 609

PROCESS TRANSMITTED/RECEIVED DATA ACCORDING TO OPERATION OF SELECTED FILTER — 611

DISPLAY PROCESSED RESULT — 613

END DIRECT CONNECTION MODE? — 615
NO

YES

END

FIG. 7

A ～100-1

B ～100-2

BERLIN (OPEN)

C ～100-3

D ～100-4

CONTENTS PROVIDER

BERLIN

100-5～ E

FIG. 8

FIG. 9

# FIG. 10A

# FIG. 10B

140

## Direct-Service

| | |
|---|---|
| D11. xxxx | D21. xxxx |
| D12. xxxx | D22. xxxxxx |
| D13. xxxx | D23. xx |
| | D24. xxxxxxxx |

141

142

| Issue | Data-Parade |
|---|---|

143

| Filter | xxxxx | Ordering |
|---|---|---|

144

145

# FIG. 11

70

| DATA TRANSMISSION PROCESSOR | 71 |
| DATA RECEPTION PROCESSOR | 72 |

FIG. 12

EP 2 838 279 A1

# FIG. 13

100-1

**FIRST ELECTRONIC DEVICE**

100-2

**SECOND ELECTRONIC DEVICE**

· · ·

100-N

**NTH ELECTRONIC DEVICE**

D1 [1301]

D1 [1301]

RESPONSE [1303]

D2, D3 [1305]

RESPONSE [1307]

EVENT [1309]

EP 2 838 279 A1

# FIG. 14

EP 2 838 279 A1

FIG. 15

<u>80</u>

81

APP OPERATOR

83

BROADCASTING INFORMATION COLLECTOR

85

DEVICE ANALYZER

FIG. 16

START

PERFORM FUNCTION STANDBY OR
FUNCTION OPERATION — 1601

1603

DIRECT CONNECTION MODE? —NO→ PERFORM CORRESPONDING FUNCTION — 1605

YES

RECEIVE AND ANALYZE BROADCASTING INFORMATION — 1607

1609

NUMBER OF
DEVICE TO BE CONNECTED BASED ON
INTEREST INFORMATION
IS PLURAL? —NO→

YES

SELECT OPTIMAL CONDITION BASED DEVICE — 1611

CONNECT SELECTED DEVICE — 1613

1615

YES← REQUIRE OPTIMAL CONDITION OPERATION?

NO

MAINTAIN PREVIOUS CONNECTION — 1617

1619

END? —NO→

YES

END

# FIG. 17

```
                          ┌─────────────┐
                          │    START    │
                          └─────────────┘
                                 │
       ┌─────────────────────────┼
       │                         ▼
       │         ┌─────────────────────────────────┐
       │         │  OPERATE DIRECT CONNECTION APP   │──── 1701
       │         └─────────────────────────────────┘
       │                         │
       │                         ▼
       │         ┌─────────────────────────────────┐
       │         │ SEARCH FOR DIRECT CONNECTION GROUP│──── 1703
       │         └─────────────────────────────────┘
       │                         │
       │                         ▼        1705
       │              ◇ THERE IS DEVICE HAVING RELATIVELY ◇ ── NO ──┐
       │                GOOD CHANNEL CHARACTERISTIC?                │
       │                         │                                 │
       │                       YES           1707                  │
       │                         ▼                                 │
       │         ┌─────────────────────────────────┐               │
       │         │   UPDATE DIRECT CONNECTION APP   │               │
       │         └─────────────────────────────────┘               │
       │                         │◄────────────────────────────────┘
       │                         ▼        1709
       └── NO ──────────◇     END FUNCTION?     ◇
                                 │
                               YES
                                 ▼
                          ┌─────────────┐
                          │     END     │
                          └─────────────┘
```

FIG. 18

FIG. 19

| No. | Service | Target ID | BER |
|---|---|---|---|
| A | Proximity Game | dsea8291 | 0.01 |
| B | File Share – Berlin | sxtq0034 | – |
| C | File Share – Berlin | fgca8799 | – |
| D | Proximity Game | ewgt2433 | 0.001 |
| E | Proximity Game | graw5322 | 0.05 |

FIG. 20

START

PERFORM FUNCTION STANDBY OR FUNCTION OPERATION — 2001

INFORMATION SHARING IS GENERATED? — 2003

NO → PERFORM CORRESPONDING FUNCTION — 2005

YES

SEARCH FOR DIRECT CONNECTION GROUP — 2007

SELECT DEVICE TO SHARE DISTANCE BASED INFORMATION — 2009

SHARE INFORMATION WITH SELECTED DEVICE — 2011

END FUNCTION? — 2013

NO

YES

END

FIG. 21

FIG. 22

| No. | Service | Target ID | Distance |
|---|---|---|---|
| A | Emergency Notice | dsea8291 | 20m |
| B | Emergency Notice | sxtq0034 | 30m |
| C | Emergency Notice | fgca8799 | 25m |
| D | Emergency Notice | ewgt2433 | 15m |
| E | Emergency Notice | graw5322 | 150m |

FIG. 23

```
                    ┌──────────┐
                    │  START   │
                    └────┬─────┘
                         │
           ┌─────────────▼──────────────┐
           │  PERFORM FUNCTION STANDBY  │─── 2301
           │    OR FUNCTION OPERATION   │
           └─────────────┬──────────────┘
                         │
      ┌──────────────────▼────────────┐
      │         2303                  │
                  ◇                           2305
         DIRECT CONNECTION BASED   NO    ┌──────────────────────────────┐
            CHATTING SERVICE?    ──────► │ PERFORM CORRESPONDING FUNCTION │
                  ◇                       └──────────────────────────────┘
                  │ YES
      ┌───────────▼──────────────────┐
      │  TRANSMIT/RECEIVE SIGNAL TO/FROM │─── 2307
      │  DIRECT CONNECTION GROUP DEVICES │
      └───────────┬──────────────────┘
      ┌───────────▼──────────────────┐
      │  SELECT DEVICE HAVING RELATIVELY │─── 2309
      │       GOOD SIGNAL STRENGTH       │
      └───────────┬──────────────────┘
      ┌───────────▼──────────────────┐
      │  FORM AND OPERATE CHATTING CHANNEL │─── 2311
      └───────────┬──────────────────┘
                  │
             2313 ◇
        NO     END FUNCTION?
      ◄────────    ◇
                  │ YES
            ┌─────▼─────┐
            │    END    │
            └───────────┘
```

FIG. 24

FIG. 25

| No. | Service | Target ID | RSS |
|---|---|---|---|
| A | Proximity Chatting | dsea8291 | -80 |
| B | Local SNS | sxtq0034 | -85 |
| C | Proximity Chatting | fgca8799 | -80 |
| D | Proximity Chatting | ewgt2433 | -70 |
| E | Proximity Chatting | graw5322 | -100 |

※ RSS (Received Signal Strenth) : unit dBm

FIG. 26

START

PERFORM DIRECT CONNECTION
BASED APP FUNCTION — 2601

IDENTIFY WHETHER OPTIMAL CONDITION
CHANGE IS GENERATED — 2603

2605

OPTIMAL CONDITION IS CHANGED? →NO→ 2607 MAINTAIN DIRECT CONNECTION

YES

UPDATE DIRECT CONNECTION DEVICE — 2609

END FUNCTION? 2611

NO

YES

END

FIG. 27

FIG. 28

Europäisches
Patentamt

European
Patent Office

Office européen
des brevets

# EUROPEAN SEARCH REPORT

**Application Number**

EP 14 18 0812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/028177 A1 (KOSKELA TIMO K [FI] ET AL) 31 January 2013 (2013-01-31)<br>* paragraph [0026] - paragraph [0027] *<br>* paragraph [0031] - paragraph [0035] *<br>* paragraph [0051] - paragraph [0085];<br>figures 2,4,5 * | 1-15 | INV.<br>H04W4/00<br>H04W52/04 |
| X<br><br>Y | US 2012/207100 A1 (HAKOLA SAMI-JUKKA [FI] ET AL) 16 August 2012 (2012-08-16)<br>* paragraph [0066] - paragraph [0069] *<br>* paragraph [0081] - paragraph [0088] *<br>* paragraph [0091] *<br>* paragraph [0097] - paragraph [0112] *<br>* paragraph [0118] - paragraph [0119] *<br>* paragraph [0122] - paragraph [0133] *<br>* paragraph [0142] - paragraph [0148] *<br>* figures 2,3,5,6,8,9,10A,11A,12,13 * | 1<br><br>3,10 | |
| Y | "Future Smartphone Solution White Paper", ,<br>17 September 2012 (2012-09-17),<br>XP055149404,<br>Retrieved from the Internet:<br>URL:http://www.google.nl/url?sa=t&rct=j&q=<br>&esrc=s&source=web&cd=3&sqi=2&ved=0CDMQFjA<br>C&url=http%3A%2F%2Fwww.huawei.com%2Filink%<br>2Fen%2Fdownload%2FHW_194460&ei=Xp1PVMjjB9D<br>bauWVgbgE&usg=AFQjCNGutd5IQ8Fckt6rWNfJwqM0<br>x3JFFg&bvm=bv.77880786,d.d2s<br>[retrieved on 2014-10-28]<br>* page 5 - page 12 * | 3,10 | |

TECHNICAL FIELDS
SEARCHED       (IPC)

H04W

-/--

The present search report has been drawn up for all claims

| Place of search | Date of completion of the search | Examiner |
|---|---|---|
| Munich | 29 October 2014 | Yanai, Yoav |

EPO FORM 1503 03.82 (P04C01)

Europäisches
Patentamt

European
Patent Office

Office européen
des brevets

# EUROPEAN SEARCH REPORT

**Application Number**

EP 14 18 0812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Gabor Fodor ET AL: "Benchmarking Practical RRM Algorithms for D2D Communications in LTE Advanced", , 22 June 2013 (2013-06-22), XP055149407, Retrieved from the Internet: URL:http://arxiv.org/abs/1306.5305 [retrieved on 2014-10-28] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 29 October 2014 | Yanai, Yoav |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 18 0812

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2014

| Patent document cited in search report | Publication date | Patent family member(s) | | Publication date |
|---|---|---|---|---|
| US 2013028177 A1 | 31-01-2013 | NONE | | |
| US 2012207100 A1 | 16-08-2012 | EP | 2676518 A1 | 25-12-2013 |
| | | US | 2012207100 A1 | 16-08-2012 |
| | | WO | 2012110368 A1 | 23-08-2012 |

EPO FORM P0459

For more details about this annex : see Official Journal of the European Patent Office, No. 12/82